# EUROPEAN PATENT SPECIFICATION

(11) **EP 4 607 974 B1**
(45) Date of publication and mention of the grant of the patent: **20.05.2026**
(21) Application number: 22964096.6
(22) Date of filing: 04.11.2022
(51) Int. Cl.: H04W 72/20, H04W 4/06, H04W 28/06, H04W 76/14, H04W 40/22, H04W 72/40, H04B 7/155

(54) **CONFIGURATION INDICATION METHOD AND COMMUNICATION APPARATUS**
KONFIGURATIONSANZEIGEVERFAHREN UND KOMMUNIKATIONSVORRICHTUNG
PROCÉDÉ D'INDICATION DE CONFIGURATION ET APPAREIL DE COMMUNICATION

(43) Date of publication of application: 27.08.2025
(73) Proprietor: Huawei Technologies Co., Ltd., Shenzhen, Guangdong 518129 (CN)
(72) Inventor: LI, Zhongfeng, Shenzhen, Guangdong 518129 (CN)
(74) Representative: Pfenning, Meinig & Partner mbB
(86) International application number: PCT/CN2022/130079
(87) International publication number: WO 2024/092793

(56) References cited:
- WO-A1-2017/067503
- WO-A1-2021/134696
- WO-A1-2021/212254
- CN-A- 111 082 893
- CN-A- 112 839 368
- CN-A- 113 676 845
- CN-A- 113 676 845
- US-A1- 2007 104 223

## Description

### TECHNICAL FIELD

This application relates to the field of communication technologies, and in particular, to a configuration indication method and a communication apparatus.

### BACKGROUND

With large-scale popularization of internet applications and wireless network devices, people have increasing requirements for wireless communication. To improve communication coverage, a relay apparatus is introduced at a current stage to support multi-hop transmission from a source apparatus to a target apparatus. Three-hop transmission is used as an example. A source apparatus needs to send data to a target apparatus through two relay apparatuses. The two relay apparatuses are respectively referred to as a first relay apparatus and a second relay apparatus. The source apparatus sends the data to the first relay apparatus. After receiving the data, the first relay apparatus forwards the data to the second relay apparatus. After receiving the data, the second relay apparatus forwards the data to the target apparatus.

However, when a sending apparatus configures a corresponding transmission resource, the sending apparatus separately configures, by using a higher layer protocol stack, a resource required in a current hop. The sending apparatus is an apparatus configured to send data in multi-hop transmission. Specifically, each hop of transmission in the multi-hop transmission includes one data sending apparatus and one data receiving apparatus. The sending apparatus is the data sending apparatus, and a receiving apparatus is the data receiving apparatus. When the sending apparatus sends data to the receiving apparatus based on a resource configured by the sending apparatus by using a higher layer protocol stack, after the receiving apparatus receives the data, the data further needs to be processed at a physical (physical, PHY) layer, a medium access control (medium access control, MAC) layer, and a radio link control (radio link control, RLC) layer, and sometimes even needs to be processed at a higher protocol layer, for example, a packet data convergence protocol (packet data convergence protocol, PDCP) layer, a service data adaptation protocol (service data adaptation protocol, SDAP) layer, or a radio resource control (radio resource control, RRC) layer, in the protocol stack. Next-hop forwarding can be performed only after processing is performed by using the higher layer protocol stack. In such a processing manner, an increase in a forwarding delay is caused, and this is not conducive to low-delay service transmission. Therefore, how to reduce a forwarding delay is an urgent problem to be resolved.

Other prior-art parameter configuration methods are disclosed in the patent publications US2007/104223A1 and CN113676845A.

### SUMMARY

This application provides a configuration indication method and a communication apparatus. According to the method described in this application, multi-hop transmission parameter configurations are scheduled in a centralized manner, so that processing time of a relay apparatus is reduced, to reduce a forwarding delay.

According to a first aspect, this application provides a configuration indication method. The method includes: obtaining first control information, where the first control information indicates a configuration of M-hop data transmission between a first apparatus and a target apparatus, the M-hop data transmission is used to transmit first data, the M-hop transmission includes transmission between the first apparatus and a second apparatus, the first control information includes first information, second information, and third information, the first information indicates a configuration used to transmit the first data between the first apparatus and the second apparatus, the second information indicates a configuration of (M-1)-hop transmission, the (M-1)-hop transmission is (M-1)-hop transmission other than the transmission between the first apparatus and the second apparatus in the M-hop transmission, the third information indicates a configuration required by the target apparatus to receive the first data, and M is an integer greater than 1; and sending the first control information to the second apparatus.

According to the method described in the first aspect, the first control information includes a configuration indication required for the M-hop transmission and the configuration required by the target apparatus for receiving. Therefore, configurations required for all hops of transmission in the M-hop transmission can be scheduled in a centralized manner by using the first control information. The first control information includes a configuration used to transmit the first data between the first apparatus and the second apparatus. Therefore, when the first apparatus is used as a relay apparatus, the first apparatus does not need to perform processing at a higher layer protocol layer to configure a corresponding transmission parameter, so that time for configuring the transmission parameter can be reduced, thereby reducing a data forwarding delay between the first apparatus and the second apparatus. In addition, in the (M-1)-hop transmission, for example, a parameter configuration required for subsequent transmission of the second apparatus may also be directly configured based on the (M-1)-hop transmission indicated by the second information in the first control information, without waiting for a sending apparatus in each hop of transmission to separately configure, by using a higher layer protocol configuration, a resource required for data transmission, to reduce a data transmission delay. If the first apparatus is a source apparatus and a scheduling apparatus, where the scheduling apparatus is an apparatus for configuring a resource for multi-hop transmission, the first apparatus still needs to perform processing by using a higher layer protocol to configure the transmission parameter corresponding to the M-hop transmission, and the relay apparatus in the M-hop transmission, for example, the second apparatus, does not need to perform processing at the higher layer protocol layer to configure a corresponding transmission resource, so that the transmission delay can be reduced.

In a possible implementation, the first information further indicates a transmission configuration used to transmit the second information, and the transmission configuration used to transmit the second information includes one or more of the following: an aggregation level, a code rate, a modulation and coding scheme, a time domain resource, and a frequency domain resource. The transmission configuration of the second information also corresponds to a configuration of a control channel or a data channel that carries transmission of the second information, for example, a configuration of the time domain resource or the frequency domain resource of the control channel or the data channel.

In a possible implementation, the first information is carried on a first control channel, and the second information and the third information are carried on a second control channel. According to this implementation, the first information is designed to be carried on the first control channel. This helps the second apparatus be capable of reading the first information in a more timely manner and performing a corresponding configuration. The second information and the third information are designed on the second control channel. This also helps avoid causing an excessively large payload carried on the first control channel, and consequently reliability of the first control information is reduced; or may avoid configuring more resources for the first control information to ensure reliability, and consequently resource utilization is reduced. In addition, because the second apparatus needs to detect a larger bandwidth, detection complexity is increased.

In a possible implementation, the first information is carried on a first control channel, the second information is carried on a second control channel, and the third information is carried on a first data channel. According to this implementation, the third information is designed to be carried on the first data channel. This helps reduce a resource loss, especially a control resource loss. Optionally, because the third information indicates the configuration required by the target apparatus to receive the first data, if the second apparatus is the relay apparatus, when the second apparatus transmits the data in an amplification and forwarding AF manner, the second apparatus does not apply the configuration, and does not need to read the third information. The third information is carried on the data channel, so that consumption of a control resource is avoided, and AF forwarding reduces a forwarding delay.

In a possible implementation, the second information further indicates a configuration used to transmit the third information, and the configuration used to transmit the third information includes one or more of the following: a code rate, a modulation and coding scheme, a time domain resource, and a frequency domain resource.

In a possible implementation, the first information or the second information further indicates a channel for transmitting the third information. If the first information or the second information indicates that a channel for transmitting the third information is the second control channel, it may be determined that the first control information is two-stage control information, including first-stage control information and second-stage control information. The first-stage control information includes the first information, and the second-stage control information includes the second information and the third information. Correspondingly, if the first information or the second information indicates that a channel for transmitting the third information is the first data channel, it may be determined that the first control information is three-stage control information, including first-stage control information, second-stage control information, and third-stage control information. The first-stage control information includes the first information, the second-stage control information includes the second information, and the third-stage control information includes the third information. According to this implementation, an available resource is controlled to adapt to control information of different payload sizes, and a resource waste caused by additional occupation of a control resource is reduced.

In a possible implementation, the first information indicates one or more of the following configurations: a delay budget of the transmission between the first apparatus and the second apparatus, a minimum time gap for forwarding the first data from a first link to a second link, a frequency domain resource configuration between the first apparatus and the second apparatus, and a time domain resource configuration between the first apparatus and the second apparatus, where the first link is a link between a network device and a terminal device, and the second link is a link between terminal devices; the second information indicates one or more of the following configurations: a time domain resource configuration of the (M-1)-hop transmission, a delay budget of the (M-1)-hop transmission, path information, a transmit beam configuration, a minimum gap between receiving time and forwarding time of the (M-1)-hop sidelink transmission, and a quasi co-location indicator; and the third information indicates one or more of the following configurations: a new data indicator, a redundancy version, a hybrid automatic repeat request (HARQ) process number, HARQ feedback (feedback) enable, HARQ feedback time, and a HARQ feedback resource.

In a possible implementation, the first information further indicates a configuration of the first data on a sidelink. According to this implementation, because a resource is obtained in a contention manner on the sidelink, the first information may be carried on a control channel that can be read by another device. This helps an apparatus for resource contention outside the M-hop transmission be capable of reading the configuration of the first data on the sidelink in the first information, to avoid contention for the corresponding resource. Therefore, an increase in a delay required for the M-hop transmission caused by resource contention by the another device can also be avoided.

In a possible implementation, the first information further indicates one or more of the following information: an end-to-end priority, a carrier configuration on the sidelink, a resource pool configuration, a sidelink frequency domain resource configuration, a sidelink resource reservation period configuration, and a sidelink time domain transmission resource configuration.

In a possible implementation, a specific implementation of obtaining the first control information is as follows: receiving second control information sent by a third apparatus; and determining the first control information based on the second control information.

In a possible implementation, the third apparatus is a network device, and the second control information includes fourth information and fifth information; the fourth information indicates one or more of the following configurations: the minimum time gap for forwarding the first data from the first link to the second link, a transmission configuration of the fifth information, a structure indication of the first control information, the carrier configuration on the sidelink, the resource pool configuration, and the sidelink frequency domain resource configuration; and the fifth information indicates one or more of the following configurations: a time domain resource configuration of the M-hop transmission, a delay budget of the M-hop transmission, the path information, a transmit beam configuration of the M-hop transmission, minimum sidelink start time of the M-hop transmission, and the quasi co-location indicator. The structure indication of the first control information means that a control structure of the first control information generated by the first apparatus is two-stage control information or three-stage control information. Optionally, if it is indicated that the structure of the first control information is three-stage control information, the structure indication of the first control information further indicates that the control channel that carries the third information is a channel type, and is specifically a data channel or a control channel. The transmission configuration of the fifth information includes one or more of the following configurations: an aggregation level AL, a code rate, a modulation and coding scheme MCS, a time domain resource, and a frequency domain resource. Optionally, a structure of the second control information is a two-stage control information structure, the second control information includes first-stage control information and second-stage control information, the first-stage control information includes the fourth information, and the second-stage control information includes the fifth information, the transmission configuration of the fifth information is a transmission configuration of the second-stage control information. According to this implementation, the third apparatus configures a configuration required by each hop of transmission in the M-hop transmission, to help implement centralized scheduling of the M-hop transmission.

In a possible implementation, a specific implementation of determining the first control information based on the second control information is as follows: determining sixth information, where the sixth information includes one or more of the following: the end-to-end priority, the resource reservation period, the delay budget of the transmission between the first apparatus and the second apparatus, and the delay budget of the (M-1)-hop transmission; and determining the first control information based on the sixth information and the second control information. According to this implementation, because the scheduling apparatus does not know factors such as a service type and a data type of the first data, the scheduling apparatus cannot configure a parameter such as a transmission delay. The first apparatus determines the sixth information, and this helps configure a more appropriate parameter, to improve user experience.

In a possible implementation, a specific implementation of sending the first control information to the second apparatus is as follows: sending the first control information to a second set, where the second set includes a plurality of apparatuses, and the second apparatus is one apparatus in the second set. According to this implementation, data transmission coverage is improved, and the first data is forwarded to a plurality of relay devices, so that data forwarding reliability can also be enhanced.

In a possible implementation, the first apparatus is an apparatus in a first set, the first set includes a plurality of apparatuses, the first control information is transmitted on a first time-frequency resource, and the first time-frequency resource is further used by another apparatus in the first set to send the first control information to an apparatus in the second set. According to this implementation, data transmission coverage is improved, and the first data is forwarded to a plurality of relay devices, so that data forwarding reliability can also be enhanced.

In a possible implementation, the second information further indicates acknowledgment time and an acknowledgment resource, the acknowledgment resource is a transmission resource used by the second set to transmit acknowledgment information, and the method further includes: if the acknowledgment information is not received after the first data is sent to the second set until the acknowledgment time, and a quantity of times of retransmission does not exceed a preset quantity of times, retransmitting the first data to the plurality of second apparatuses. According to this implementation, configurations of relay apparatuses in each set are managed in a centralized manner, and a case in which data forwarding is disordered due to a large quantity of relay apparatuses in one set is avoided.

In a possible implementation, the second information further includes a zone identifier Zone ID indication. The Zone ID is an identifier of a set, of a plurality of relay apparatuses, corresponding to one node in the M-hop transmission, for example, an identifier of the first set and an identifier of the second set in the foregoing implementation. With reference to the path information indicated in the second information described above, the path information may include a source apparatus identifier, a target apparatus identifier, and a Zone ID of a set corresponding to a plurality of relay nodes between the source apparatus and the target apparatus. The second apparatus can determine, by using the Zone ID, a set corresponding to a next hop, so that the first data received by the first set may be forwarded to the corresponding set of the next hop.

In a possible implementation, M is greater than 2.

According to a second aspect, this application provides a configuration indication method. The method includes: receiving first control information from a first apparatus, where the first control information indicates a configuration of M-hop data transmission between the first apparatus and a target apparatus, the M-hop data transmission is used to transmit first data, the M-hop transmission includes transmission between the first apparatus and a second apparatus, the first control information includes first information, second information, and third information, the first information indicates a configuration used to transmit the first data between the first apparatus and the second apparatus, the second information indicates a configuration of (M-1)-hop transmission, the (M-1)-hop transmission is (M-1)-hop transmission other than the transmission between the first apparatus and the second apparatus in the M-hop transmission, the third information indicates a configuration required by the target apparatus to receive the first data, and M is an integer greater than 1. For corresponding beneficial effect in the second aspect and the possible implementations of the second aspect, refer to the corresponding descriptions in the first aspect. Details are not described herein again in this embodiment of this application.

In a possible implementation, the first information further indicates a configuration used to transmit the second information, and the configuration used to transmit the second information includes one or more of the following: an aggregation level, a code rate, a modulation and coding scheme, a time domain resource, and a frequency domain resource.

In a possible implementation, the first information is carried on a first control channel, and the second information and the third information are carried on a second control channel.

In a possible implementation, the first information is carried on a first control channel, the second information is carried on a second control channel, and the third information is carried on a first data channel.

In a possible implementation, a configuration used to transmit the third information includes one or more of the following: a code rate, a modulation and coding scheme, a time domain resource, and a frequency domain resource.

In a possible implementation, the first information or the second information further indicates a channel for transmitting the third information.

In a possible implementation, the first information indicates one or more of the following configurations: a minimum time gap for forwarding the first data from a first link to a second link, a frequency domain resource configuration between the first apparatus and the second apparatus, and a time domain resource configuration between the first apparatus and the second apparatus, where the first link is a link between a network device and a terminal device, and the second link is a link between terminal devices; the second information indicates one or more of the following configurations: a time domain resource configuration of the (M-1)-hop transmission, a delay budget of the (M-1)-hop transmission, path information, a transmit beam configuration, a minimum gap between receiving time and forwarding time of the (M-1)-hop sidelink transmission, and a quasi co-location indicator; and the third information indicates one or more of the following configurations: retransmission configuration information, a new data indicator, and a redundancy version.

In a possible implementation, the first information further indicates a configuration of the first data on a sidelink.

In a possible implementation, the configuration of the first data on the sidelink includes one or more of the following information: an end-to-end priority, a carrier configuration on the sidelink, a resource pool configuration, a sidelink frequency domain resource configuration, and a sidelink resource reservation period configuration.

In a possible implementation, a specific implementation of receiving the first control information from the first apparatus is as follows: receiving the first control information from a first set, where the first set includes a plurality of apparatuses, and the first apparatus is one apparatus in the first set.

In a possible implementation, the second information further indicates acknowledgment time and an acknowledgment resource, the acknowledgment resource is a transmission resource used by the second set to transmit acknowledgment information, and the method further includes: if the first data from the first set is received, sending the acknowledgment information to the first set on the acknowledgment resource within the acknowledgment time.

In a possible implementation, the second information further includes a zone identifier Zone ID indication.

In a possible implementation, M is greater than 2.

According to a third aspect, this application provides a communication apparatus. The communication apparatus may alternatively be a chip system. The communication apparatus may perform the method according to the first aspect. A function of the communication apparatus may be implemented by hardware, or may be implemented by the hardware executing corresponding software. The hardware or the software includes one or more units or modules corresponding to the foregoing function. The unit or module may be software and/or hardware. For operations performed by the communication apparatus and beneficial effect, refer to the method according to the first aspect and the beneficial effect. Repeated parts are not described again.

According to a fourth aspect, this application provides a communication apparatus. The communication apparatus may alternatively be a chip system. The communication apparatus may perform the method according to the second aspect. A function of the communication apparatus may be implemented by hardware, or may be implemented by the hardware executing corresponding software. The hardware or the software includes one or more units or modules corresponding to the foregoing function. The unit or module may be software and/or hardware. For operations performed by the communication apparatus and beneficial effect, refer to the method according to the second aspect and the beneficial effect. Repeated parts are not described again.

According to a fifth aspect, this application provides a communication apparatus. The communication apparatus includes a processor; and when the processor invokes a computer program in a memory, the method according to the first aspect or the second aspect is performed.

In a possible implementation, the communication apparatus further includes the memory, and the memory and the processor are coupled to each other. Optionally, the memory and the processor are integrated together.

In a possible implementation, the communication apparatus further includes a transceiver, and the transceiver is configured to receive and send data and/or signaling.

According to a sixth aspect, this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to the first aspect or the second aspect through a logic circuit or by executing code instructions.

According to a seventh aspect, this application provides a computer-readable storage medium. The storage medium stores a computer program or instructions; and when the computer program or the instructions are executed by a communication apparatus, the method according to the first aspect or the second aspect is implemented.

According to an eighth aspect, an embodiment of this application provides a computer program or a computer program product, including code or instructions. When the code or the instructions are run on a computer, the computer is enabled to perform the method according to the first aspect or the second aspect.

According to a ninth aspect, an embodiment of this application provides a communication system. The system includes the communication apparatuses provided in the third aspect and the fourth aspect.

### BRIEF DESCRIPTION OF DRAWINGS

FIG. 1 is a diagram of a communication system according to an embodiment of this application;
FIG. 2 is a diagram of one type of three-hop transmission according to an embodiment of this application;
FIG. 3 is an interaction diagram of a configuration indication method according to an embodiment of this application;
FIG. 4 is a diagram of a resource structure according to an embodiment of this application;
FIG. 5 is a diagram of another resource structure according to an embodiment of this application;
FIG. 6 is a diagram of another resource structure according to an embodiment of this application;
FIG. 7 is a diagram of another type of three-hop transmission according to an embodiment of this application;
FIG. 8 is a diagram of transmission between a first set and a second set according to an embodiment of this application;
FIG. 9 is a diagram of another type of multi-hop transmission according to an embodiment of this application;
FIG. 10 is a diagram of a structure of a communication apparatus according to an embodiment of this application;
FIG. 11 is a diagram of a structure of another communication apparatus according to an embodiment of this application;
FIG. 12 is a diagram of a structure of another communication apparatus according to an embodiment of this application; and
FIG. 13 is a diagram of a structure of a chip according to an embodiment of this application.

### DESCRIPTION OF EMBODIMENTS

The following further describes specific embodiments of this application in detail with reference to accompanying drawings.

The terms "first", "second", and the like in this specification, the claims, and the accompanying drawings of this application are intended to distinguish between different objects, but not to describe a specific sequence. In addition, the terms "include", "have", and any other variant thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned in the specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by persons skilled in the art that embodiments described in the specification may be combined with another embodiment.

In this application, "at least one (item)" means one or more, "a plurality of" means two or more, "at least two (items)" means two, three, or more, and "and/or" is used to describe a correspondence between associated objects and indicates that three relationships may exist. For example, "A and/or B" may indicate the following three cases: Only A exists, only B exists, and both A and B exist, where A and B may be singular or plural. The character "/" usually indicates an "or" relationship between associated objects. "At least one of the following items (pieces)" or a similar expression thereof is any combination of these items, including any combination of singular items (pieces) or plural items (pieces). For example, at least one item (piece) of a, b, or c may indicate a, b, c, "a and b", "a and c", "b and c", or "a, b, and c", where a, b, and c may be singular or plural.

To enable a terminal device with a low bandwidth capability to receive a candidate physical downlink control channel (Physical Downlink Control Channel, PDCCH) with a high aggregation level, embodiments of this application provide a data transmission method. The following first describes technical terms in this application.

The following describes a system architecture in embodiments of this application.

To facilitate understanding of technical solutions in embodiments of this application, the following briefly describes a system architecture of a method provided in embodiments of this application. It may be understood that the system architecture described in embodiments of this application is intended to describe the technical solutions in embodiments of this application more clearly, and does not constitute a limitation on the technical solutions provided in embodiments of this application.

Technical solutions in embodiments of this application may be applied to various communication systems such as a satellite communication system and a conventional mobile communication system. The satellite communication system may be integrated with the conventional mobile communication system (namely, a terrestrial communication system). The communication system is, for example, a wireless local area network (wireless local area network, WLAN) communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a 5th generation (5th generation, 5G) system or new radio (new radio, NR), a 6th generation (6th generation, 6G) system, or another future communication system. The communication system further supports a communication system integrating a plurality of wireless technologies, for example, may be further used in a system that integrates a non-terrestrial network (non-terrestrial network, NTN) and a terrestrial mobile communication network, for example, an uncrewed aerial vehicle, a satellite communication system, or high altitude platform station (high altitude platform station, HAPS) communication.

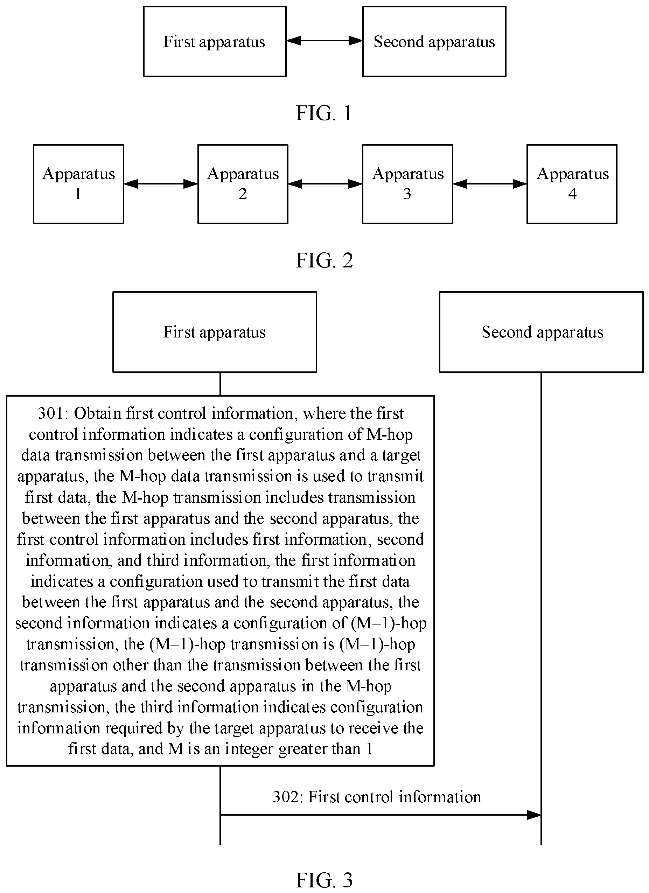

FIG. 1 is a diagram of a communication system to which an embodiment of this application is applicable. The communication system includes at least one first apparatus and at least one second apparatus. In FIG. 1, one first apparatus and one second apparatus are used as an example. A quantity of first apparatuses and a quantity of second apparatuses are not limited in embodiments of this application. The first apparatus and the second apparatus can communicate with each other. In addition, the first apparatus and the second apparatus may further establish a communication connection to another apparatus or device.

In a possible implementation, the first apparatus and/or the second apparatus may be a network device, or an apparatus that implements a function of the network device, or may be an apparatus that can support the network device to implement the function, for example, a chip system. The apparatus may be installed in the network device. The network device mentioned in embodiments of this application may be a device configured to communicate with a terminal device, or may be a device that accesses the terminal device to a wireless network. The network device may be a node in a radio access network, and may also be referred to as a base station, or may be referred to as a radio access network (radio access network, RAN) node (or device). For example, the base station in embodiments of this application may include base stations in various forms, for example, a macro base station, a micro base station (also referred to as a small cell), a relay station, an access point, an evolved NodeB (evolved NodeB, eNB or eNodeB) in LTE, a next-generation NodeB (gNodeB, gNB) in a 5G network, a broadband network gateway (broadband network gateway, BNG), an aggregation switch or a non-3rd generation partnership project (3rd generation partnership project, 3GPP) access device, a transmission reception point (transmission reception point, TRP), a transmission point (transmission point, TP), a mobile switching center, a home base station (for example, a home evolved NodeB, or a home NodeB, HNB), a baseband unit (baseband unit, BBU), a baseband pool BBU, a Wi-Fi access point (access point, AP), a central unit (central unit, CU) and a distributed unit (distributed unit, DU) in a cloud radio access network (cloud radio access network, C-RAN) system, an integrated access and backhaul (integrated access and backhaul, IAB) node, device-to-device (Device-to-Device, D2D), vehicle-to-everything (vehicle-to-everything, V2X), or machine-to-machine (machine-to-machine, M2M) communication, internet of things (Internet of Things) communication, and a device that undertakes a function of the base station in a communication system evolved after 5G such as 6G.

In another possible implementation, the first apparatus and/or the second apparatus may be a terminal device, or an apparatus that implements a function of the terminal device, or may be an apparatus that can support the terminal device to implement the function, for example, a chip system. The apparatus may be installed in the terminal device. The terminal device mentioned in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a communication device on a high-altitude aircraft, a wearable device, an uncrewed aerial vehicle, a robot, a terminal in D2D, a terminal in V2X, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

The first apparatus and the second apparatus are two apparatuses in multi-hop transmission. Usually, in the multi-hop transmission, at least one source apparatus, at least one target apparatus, and at least one relay apparatus are included. The multi-hop transmission means that data is not directly transmitted from the source apparatus to the target apparatus once, but is forwarded by a plurality of relay apparatuses between the source apparatus and the target apparatus. That is, the data is forwarded by one or more relay apparatuses on a link. The source apparatus is configured to transmit the data to the target apparatus, and is a 1^{st} apparatus that sends the data in the multi-hop transmission. The target apparatus is configured to receive the data from the source apparatus, and is a last apparatus that receives the data in the multi-hop transmission. The relay apparatus is configured to assist the source apparatus in forwarding the data to the target apparatus, and is an intermediate node between the source apparatus and the target apparatus. In addition, the source apparatus may also receive data sent by the target apparatus, and the relay apparatus may also be configured to assist the target apparatus in forwarding the data to the source apparatus.

FIG. 2 is used as an example. FIG. 2 shows a three-hop transmission manner. An apparatus 1 is used as a source apparatus, an apparatus 4 is used as a target apparatus, and both an apparatus 2 and an apparatus 3 are used as relay apparatuses. The apparatus 1 sends data to the apparatus 2. After receiving the data, the apparatus 2 forwards the data to the apparatus 3. After receiving the data, the apparatus 3 forwards the apparatus to the apparatus 4.

In multi-hop transmission, one-hop transmission indicates one transmission process of data, a 1^{st} hop indicates 1^{st} time of transmission of the data, and a 2^{nd} hop represents a 2^{nd} time of transmission of the data. The M-hop transmission is used as an example. In the M-hop transmission, (M+1) apparatuses are included. During data transmission, data sequentially passes through the (M+1) apparatuses. An i^{th} apparatus may be understood as an i^{th} apparatus that obtains the data. Correspondingly, a 1^{st} hop indicates that a 1^{st} apparatus sends the data to a 2^{nd} apparatus, a 2^{nd} hop indicates that the 2^{nd} apparatus sends the data to a 3^{rd} apparatus, and correspondingly an i^{th} hop indicates that an i^{th} apparatus sends the data to an (i+1)^{th} apparatus.

Based on the communication system described above, the following mainly describes the technical background of embodiments of this application.

With large-scale popularization of internet applications and wireless network devices, people have increasing requirements for wireless communication. To improve communication coverage, a relay apparatus is introduced at a current stage to support multi-hop transmission from a source apparatus to a target apparatus. Three-hop transmission is used as an example. The source apparatus needs to send data to the target apparatus through two relay apparatuses. The two relay apparatuses are respectively referred to as a first relay apparatus and a second relay apparatus. The source apparatus sends the data to the first relay apparatus. After receiving the data, the first relay apparatus forwards the data to the second relay apparatus. After receiving the data, the second relay apparatus forwards the data to the target apparatus.

However, when a sending apparatus configures a corresponding transmission resource, the sending apparatus separately configures, by using a higher layer protocol stack, a resource required in a current hop. The sending apparatus is an apparatus configured to send data in multi-hop transmission. Specifically, each hop of transmission in the multi-hop transmission includes one data sending apparatus and one data receiving apparatus. The sending apparatus is the data sending apparatus, and a receiving apparatus is the data receiving apparatus. When the sending apparatus sends data to the receiving apparatus based on a resource configured by the sending apparatus by using a higher layer protocol stack, after the receiving apparatus receives the data, the data further needs to be processed at a PHY layer, a MAC layer, and an RLC layer, and sometimes even needs to be processed at a higher protocol layer, for example, a PDCP layer, an SDAP layer, or an RRC layer, in the protocol stack. Next-hop forwarding can be performed only after processing is performed by using the higher layer protocol stack. In such a processing manner, an increase in a forwarding delay is caused, and this is not conducive to low-delay service transmission. Therefore, how to reduce a forwarding delay is an urgent problem to be resolved.

To reduce a forwarding delay of a relay apparatus, embodiments of this application provide a configuration indication manner. This solution may be mainly applied to fields such as D2D, V2V, an IAB, an uncrewed aerial vehicle (Unmanned Aerial Vehicle, UAV), an intelligent factory, and automated machine manufacturing. In addition, the solution may also be applied to another field. An application field to which the technical solution is applicable is not limited in embodiments of this application.

FIG. 3 is an interaction diagram of a configuration indication method according to an embodiment of this application. As shown in FIG. 3, the configuration indication method includes step 301 and step 302. The method shown in FIG. 3 may be performed by a first apparatus and a second apparatus. Alternatively, the method shown in FIG. 3 may be performed by chips in the first apparatus and the second apparatus. In FIG. 3, the first apparatus and the second apparatus are used as an example for description. Similarly, methods in subsequent figures are performed by the first apparatus and the second apparatus, and details are not described subsequently.

301: The first apparatus obtains first control information, where the first control information indicates a configuration of M-hop data transmission between the first apparatus and a target apparatus, the M-hop data transmission is used to transmit first data, the M-hop transmission includes transmission between the first apparatus and the second apparatus, the first control information includes first information, second information, and third information, the first information indicates a configuration used to transmit the first data between the first apparatus and the second apparatus, the second information indicates a configuration of (M-1)-hop transmission, the (M-1)-hop transmission is (M-1)-hop transmission other than the transmission between the first apparatus and the second apparatus in the M-hop transmission, the third information indicates a configuration required by the target apparatus to receive the first data, and M is an integer greater than 1.

In this embodiment of this application, the M-hop transmission between the first apparatus and the target apparatus means that data transmitted by the first apparatus to the target apparatus needs to be forwarded through (M-1) relay apparatuses, so that the data can be transmitted to the target apparatus. The (M-1)-hop transmission described in this embodiment of this application is the (M-1)-hop transmission other than the transmission between the first apparatus and the second apparatus in the M-hop transmission. The transmission between the first apparatus and the second apparatus may be understood as first-hop transmission in the M-hop transmission. Correspondingly, the (M-1)-hop transmission may be understood as remaining-hop transmission other than the first-hop transmission in the M-hop transmission. For example, assuming that M is 3, the transmission between the first apparatus and the second apparatus is first-hop transmission in the M-hop transmission, and the (M-1)-hop transmission is second-hop transmission and third-hop transmission in the M-hop transmission.

The M-hop transmission between the first apparatus and the target apparatus is K-hop transmission between a source apparatus and the target apparatus, and K is an integer greater than or equal to M. Based on the foregoing descriptions of the multi-hop transmission, the K-hop transmission between the source apparatus and the target apparatus means that when the source apparatus transmits data to the target apparatus, the source apparatus further needs to perform forwarding through (K-1) relay apparatuses, so that the data can be transmitted to the target apparatus. The source apparatus is configured to transmit the data to the target apparatus, and is a 1^{st} apparatus that sends the data in the multi-hop transmission. The target apparatus is configured to receive the data from the source apparatus, and is a last apparatus that receives the data in the multi-hop transmission. The relay apparatus is configured to assist the source apparatus in forwarding the data to the target apparatus, and is an intermediate node between the source apparatus and the target apparatus. In addition, the source apparatus may also receive data sent by the target apparatus, and the relay apparatus may also be configured to assist the target apparatus in forwarding the data to the source apparatus. This is not limited in this embodiment of this application. In subsequent descriptions of this embodiment of this application, a solution in which the source apparatus is used as a data transmit end and the target apparatus is used as a data receive end is mainly used for description, and a solution in which the source apparatus is used as a receive end and the target apparatus is used as a transmit end may be obtained in a similar manner. Details are not described in this embodiment of this application.

When K is greater than M, the first apparatus is a relay apparatus between the source apparatus and the target apparatus. When K is equal to M, the first apparatus is the source apparatus. The M-hop transmission includes the transmission between the first apparatus and the second apparatus. Optionally, the first apparatus and the second apparatus are two adjacent apparatuses in the M-hop transmission. It may be understood that the transmission between the first apparatus and the second apparatus is one-hop transmission in the M-hop transmission. Alternatively, one or more relay apparatuses may be further included between the first apparatus and the second apparatus. In other words, the transmission between the first apparatus and the second apparatus is multi-hop transmission in the M-hop transmission. When the source apparatus is used as a transmit end and the target apparatus is used as a receive end, in the transmission between the first apparatus and the second apparatus, the first apparatus is the transmit end, and the second apparatus is the receive end.

According to the method described in this application, the first control information includes a configuration indication required for the M-hop transmission and the configuration required by the target apparatus for receiving. Therefore, configurations required for all hops of transmission in the M-hop transmission can be scheduled in a centralized manner by using the first control information. The first control information includes the configuration used to transmit the first data between the first apparatus and the second apparatus. Therefore, when the first apparatus is used as a relay apparatus, the first apparatus does not need to perform processing at a higher layer protocol layer to configure a corresponding transmission resource, so that data forwarding and transmission can be directly performed, thereby reducing a data forwarding delay between the first apparatus and the second apparatus. In addition, in the (M-1)-hop transmission, for example, a parameter configuration required for subsequent transmission of the second apparatus may also be directly configured based on the (M-1)-hop transmission indicated by the second information in the first control information, without waiting for a sending apparatus in each hop of transmission to separately configure, by using a higher layer protocol configuration, a resource required for data transmission, to reduce a data transmission delay. If the first apparatus is a source apparatus and a scheduling apparatus, where the scheduling apparatus is an apparatus for configuring a multi-hop resource, the first apparatus still needs to perform processing by using a higher layer protocol to configure a transmission parameter corresponding to the M-hop transmission, and the relay apparatus in the M-hop transmission, for example, the second apparatus, does not need to perform processing at the higher layer protocol layer to configure a corresponding transmission resource, so that the transmission delay can be reduced.

In a possible implementation, M is an integer greater than 2. In this implementation, there are at least two relay apparatuses between the first apparatus and the target apparatus. If M is larger, when configurations required by all hops are separately indicated by using higher layer signaling in the conventional technology, a delay required by the relay apparatus to forward the first data is higher. If the method described in this embodiment of this application is used, the configurations required by all the hops may be scheduled in a centralized manner, and in each hop of transmission, there is no need to separately wait for the transmit end to configure the parameter at the higher layer protocol layer. This helps reduce the data transmission delay.

In a possible implementation, a data forwarding manner used in the M-hop transmission may support an amplification and forwarding (amplify and forward, AF) manner of a layer 0 (L0, layer 0), or a decoding and forwarding (decode and forward, DF) manner of a layer 1 (L1, layer 1) or a low (low) MAC layer. In this relay forwarding manner of L0 or L1 in a centralized scheduling manner, the relay apparatus does not need to perform processing on protocol layers of a protocol stack control plane and a protocol stack data plane, and only needs to perform processing on a bottom-layer protocol stack. This can greatly reduce processing time of each relay apparatus. Specifically, for L0 forwarding, on the data plane, radio frequency amplification and forwarding are performed on received data. From receiving to sending, decoding/encoding of a physical layer PHY and the like is not required, and receiving and sending processing of protocol layers such as a MAC protocol layer, an RLC protocol layer, and a PDCP protocol layer are not required. On the control plane, control information required for scheduling is from a configuration of the centralized scheduling apparatus, may be transferred to the relay apparatus hop by hop through a multi-hop physical layer control channel, and does not need to be obtained by the relay apparatus through independent processing at all protocol layers in a protocol stack from receiving to sending. For L1 forwarding or low MAC forwarding, on the data plane, decoding/encoding is performed on the received data, and decoding of the L1 forwarding or the low MAC forwarding may be joint decoding performed on repeatedly transmitted data. Specifically, PHY layer processing, or PHY layer and low MAC layer processing, for example, a part of HARQ retransmission and combination, needs to be performed, a higher-layer part of the MAC layer such as RLC data multiplexing and demultiplexing is not required, and processing of higher layer protocols such as RLC and a PDCP is not required. On the control plane, main information required for scheduling is from the configuration of the centralized scheduling apparatus, may be transferred to the relay apparatus hop by hop through the multi-hop physical layer control channel, and does not need to be obtained by the relay apparatus through processing at all protocol layers such as a MAC layer higher layer, an RLC layer, a PDCP layer, and an RRC layer in the protocol stack from receiving to sending. The AF or DF forwarding manner may be combined based on a good mutual assistance relationship between the centralized scheduling apparatus or the source apparatus and the multi-hop relay apparatus. For example, the centralized scheduling apparatus or the source apparatus may also be used as the relay apparatus, and the relay apparatus may also be used as the centralized scheduling apparatus or the source apparatus. The relay apparatus configures, based on a priority or quality of service (Quality of Service, QoS) of a to-be-forwarded service and with reference to a configuration of the received transmission parameter, a required forwarding resource from an available resource for forwarding and use, and another available resource may be configured and used for a service of the relay. For example, assuming that the first apparatus is the relay apparatus in the M-hop transmission, but the first apparatus may also be used as the source apparatus to communicate with another apparatus, the first apparatus may determine, based on the configuration of the transmission parameter obtained by the first apparatus, the transmission resource required by the first apparatus to forward the first data in the M-hop transmission as the relay apparatus, and a remaining resource may be used by the first apparatus as a transmission resource for sending the data by the source apparatus. Therefore, this low-delay multi-hop forwarding solution may be performed on various devices, does not depend on a specific device type, and may be widely used.

In a possible implementation, the first apparatus may be a terminal device or a network device, and the second apparatus may also be a terminal device or a network device. Therefore, in this embodiment of this application, forwarding and transmission between network devices, forwarding and transmission between terminal devices, and forwarding and transmission between a terminal device and a network device can be supported, thereby improving coverage of data transmission.

The following embodiments of this application separately describe the method described in this application from a plurality of aspects, for example, a structure of the first control information, the configurations indicated by the first information, the second information, and the third information, and an implementation in which the first apparatus obtains the first control information.

### 1. Structure of the first control information:

In a possible implementation, the structure of the first control information is a multi-stage control information structure. In multi-stage control information, first-stage control information is transmitted on a control channel, and second-stage or higher-stage control information is transmitted on one or more separate channels. The channel that carries the second-stage or higher-stage control information may be an additional control channel or a data channel. The multi-stage control information is used to configure relatively fixed control information on a first-stage control channel on which blind detection needs to be performed, to avoid detecting a control channel that carries a variable payload, so that complexity of blind detection can be reduced. In addition, in a design of the multi-stage control information, a size of the multi-stage control information is supported to be variable, multi-hop control information whose payload is variable because a quantity of hops is variable is configured on the channel corresponding to the second-stage or higher-stage control information, and transmission of the second-stage or higher-stage control information is indicated by using the first-stage control information, so that effective data transmission is implemented in a multi-hop transmission scenario with different quantities of hops.

Optionally, the first control information uses a two-stage control information structure. First-stage control information includes the first information, and second-stage control information includes the second information and the third information.

Further, optionally, the first-stage control information is transmitted on a first control channel, and the second-stage control information is transmitted on a second control channel. Correspondingly, the first information is carried on the first control channel, and the second information and the third information are carried on the second control channel. A manner of configuring resources for the control channels that carry the first-stage control information and the second-stage control information may be: determining that a bandwidth of the resource for the control channel that carries the first-stage control information is within a first bandwidth, and transmitting the second-stage control channel on the first bandwidth. When obtaining the first information by using the first bandwidth, the second apparatus can also obtain the second information. Alternatively, a time domain resource of the control channel that carries the first information is the same as a time domain resource of the control channel that carries the second information, or a time domain resource of the control channel that carries the first information is before a time domain resource of the control channel that carries the second information.

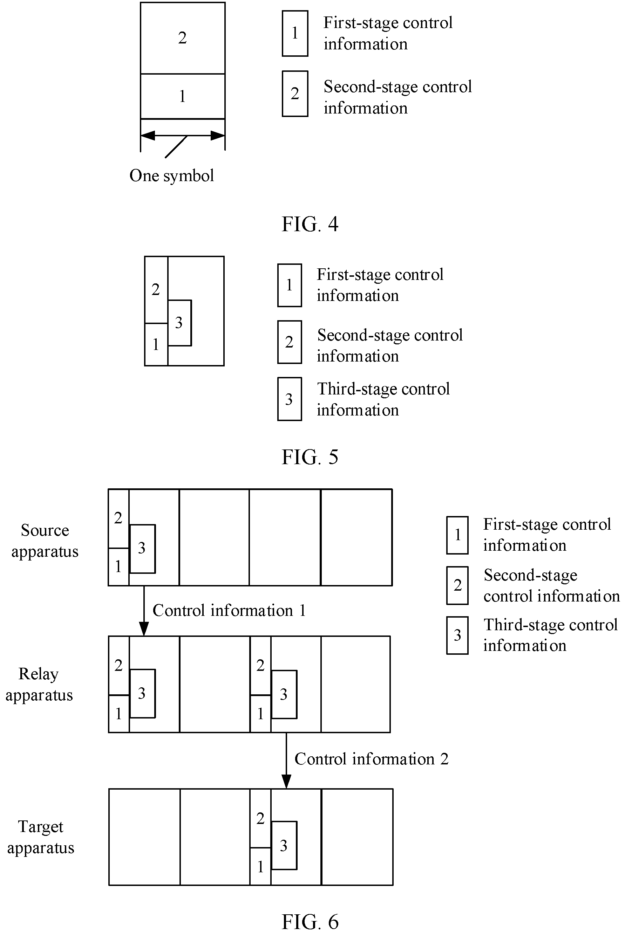

For example, as shown in FIG. 4, the control channel that carries the first-stage control information and the control channel that carries the second-stage control information are both transmitted on a same symbol, a time domain resource for carrying the first-stage control information is the same as a time domain resource for the control channel that carries the second-stage control information, and a frequency domain resource for carrying the first-stage control information and a frequency domain resource of the control channel that carries the second-stage control information are consecutive. The first information further indicates the configuration used to transmit the second information, namely, a configuration used to transmit the second-stage control information. The configuration used to transmit the second information includes one or more of the following: an aggregation level (aggregation level, AL), a code rate, a modulation and coding scheme (modulation and coding scheme, MCS), a time domain resource, and a frequency domain resource. The configuration of the second information also corresponds to a configuration of a control channel or a data channel that carries transmission of the second information, for example, a configuration of the time domain resource or the frequency domain resource of the control channel or the data channel. The first-stage control information and the second-stage control information may use a same modulation scheme. The AL is a quantity of control channel elements (Control channel elements, CCE) that constitute the control channel. To be specific, one control channel includes a CCEs, and the aggregation level of the control channel is a. The MCS indicates a data transmission rate and a corresponding modulation scheme by using an index. The modulation scheme may also be preconfigured. In this case, the MCS for control is equivalent to the code rate for control, that is, corresponds to the aggregation level.

The first information indicates the configuration used to transmit the first data between the first apparatus and the second apparatus, namely, the configuration required for the first-hop transmission in the corresponding M-hop transmission, and is a configuration applied when the first apparatus and the second apparatus currently perform data transmission. The configuration, of the (M-1)-hop transmission, that is indicated by the second information and the configuration, required by the target apparatus to receive the first data, that is indicated by the third information are both configurations applied after the first apparatus and the second apparatus perform data transmission, and are temporarily not vulnerable to interference from a surrounding adjacent device in the current hop. Therefore, the configuration indicated by the first information is a configuration that is applied more quickly in terms of time, and is more vulnerable to interference from the surrounding adjacent device in the current hop. In addition, the configuration indicated by the first information includes a configuration required for one-hop transmission (the transmission between the first apparatus and the second apparatus), a size of the first information is fixed; and the configuration indicated by the second information includes the configuration of (M-1) hops, and a size of the second information varies with a quantity of hops. The first information is designed in the first control information, and is correspondingly carried on the first control channel, so that the second apparatus can read the first information in a more timely manner, and perform corresponding configuration, and a surrounding adjacent device can also read the first information in a timely manner, to avoid occupying a resource corresponding to the surrounding adjacent device; and the adjacent device may also configure a current resource and a future resource based on the first information, to avoid mutual interference. Designing the second information and the third information in the second control information also helps avoid an excessively large payload carried on the first control channel, reducing reliability of the first control channel. Alternatively, to ensure reliability, more resources need to be configured for the first control channel, reducing resource utilization. Consequently, complexity of the second apparatus is increased because the second apparatus detects a larger bandwidth.

Optionally, the first control information uses a three-stage control information structure. First-stage control information includes the first information, second-stage control information includes the second information, and third-stage control information includes the third information.

Further, optionally, the first-stage control information is transmitted on the first control channel, the second-stage control information is transmitted on the second control channel, and the third-stage control information is transmitted on the first data channel. Correspondingly, the first information is carried on the first control channel, the second information is carried on the second control channel, and the third information is carried on the first data channel. A manner of configuring resources for carrying the first information and the second information may be the same as that in the foregoing descriptions of the two-stage control information structure used by the first control information. Details are not described herein again in this embodiment of this application. Still further, optionally, an AF forwarding manner is used for the M-hop transmission, and a control channel and a data channel are separately mapped to resources. To be specific, a resource for the control channel that carries the first-stage control information and a resource for the data channel that carries the third-stage control information are time division multiplexed, and a resource for the control channel that carries the second-stage control information and a resource for the data channel that carries the third-stage control information are time division multiplexed. For example, as shown in FIG. 5, a time domain resource for the control channel that carries the first-stage control information and a time domain resource for the control channel that carries the second-stage control information are the same, and are on a same symbol; and a time domain resource for the control channel that carries the first-stage control information and a time domain resource for the data channel that carries the third-stage control information are on different symbols, and do not overlap. Further, the second information further indicates the configuration that is used to transmit the third information and that is of the data channel that carries the third information, and specifically includes one or more of the following: a code rate, an MCS, a time domain resource, and a frequency domain resource.

The first information indicates the configuration used to transmit the first data between the first apparatus and the second apparatus, namely, the configuration required for the first-hop transmission in the corresponding M-hop transmission, and is a configuration applied when the first apparatus and the second apparatus perform data transmission. The configuration, of the (M-1)-hop transmission, that is indicated by the second information and the configuration, required by the target apparatus to receive the first data, that is indicated by the third information are both configurations applied after the first apparatus and the second apparatus perform data transmission, and are temporarily not vulnerable to interference from a surrounding adjacent device in the current hop. Therefore, the configuration indicated by the first information is a configuration that is currently fastest to be applied in terms of time, and is more vulnerable to interference from the surrounding adjacent device in the current hop. The first information is designed in the first control information, and the first information is correspondingly carried on the first control channel, so that the second apparatus can read the first information in a more timely manner, and perform corresponding configuration. Similarly, it can be learned that, because the configuration, required by the target apparatus to receive the first data, that is indicated by the third information, in the process of the M-hop transmission, is a configuration required after the target apparatus receives the first data in a last hop, compared with the configuration indicated by the third information, the configuration indicated by the second information is applied more quickly in terms of time. Therefore, the second information is transmitted on the second control channel, so that the second apparatus can read the second information in a more timely manner, and perform corresponding configuration, and a surrounding adjacent device can also read the second information in a timely manner, to avoid occupying a resource corresponding to the surrounding adjacent device; and the adjacent device may also configure a current resource and a future resource based on the first information, to avoid mutual interference. In addition, in the AF forwarding manner, the control information may occupy a small part of resources in the transmission resource on a last symbol, causing a waste of resources on the symbol. Therefore, the third information is carried on the first data channel. This helps reduce resource consumption. Because the third information indicates the configuration required by the target apparatus to receive the first data, if the second apparatus is the relay apparatus forwarded by through AF, the second apparatus does not apply the configuration. The third information is carried on the data channel, and the relay apparatus may perform only AF forwarding on the third information, so that additional resource occupation of the control channel is avoided, and resource utilization is improved. In addition, the relay does not need to read forwarded the data, so that a forwarding delay is reduced.

The first control information uses the three-stage control information structure. In addition to being transmitted on the first data channel, the third-stage control information may also be transmitted on the third control channel. In addition, the second information further indicates the configuration that is used to transmit the third information and that is of the control channel that carries the third information, and specifically includes one or more of the following: a code rate, an MCS, a time domain resource, and a frequency domain resource. Because the third information indicates the configuration required by the target apparatus to receive the first data, the second apparatus is used as the relay apparatus, and therefore may not need to read the third information, and the third information is designed on the third control channel. This helps avoid an excessively large payload carried on the first control channel, thereby reducing reliability of the first control channel.

In a possible implementation, if the first apparatus is a network device, and the second apparatus is a terminal device, the first control information is downlink control information (downlink control information, DCI). Optionally, if the first control information is multi-stage control information and is two-stage control information, first-stage control information included in the first control information is first-stage DCI, and second-stage control information is second-stage DCI. If the first control information is three-stage control information, third-stage control information in the first control information is third-stage DCI.

In a possible implementation, if the first apparatus is a terminal device, and the second apparatus is a terminal device, the first control information is sidelink control information (sidelink control information, SCI) or super sidelink control information (super sidelink control information, SSCI). Optionally, if the first control information is multi-stage control information and is two-stage control information, first-stage control information included in the first control information is first-stage SCI or first-stage SSCI, and second-stage control information is second-stage SCI or second-stage SSCI. If the first control information is three-stage control information, third-stage control information in the first control information is third-stage SCI or third-stage SSCI.

With reference to the foregoing described case in which the structure of the first control information is two-stage control information or three-stage control information, in a possible implementation, the first information or the second information further indicates a channel for transmitting the third information. It may be understood that, if the first information or the second information indicates that a channel for transmitting the third information is the second control channel, it may be determined that the first control information is two-stage control information, including first-stage control information and second-stage control information. The first-stage control information includes the first information, and the second-stage control information includes the second information and the third information. Correspondingly, if the first information or the second information indicates that a channel for transmitting the third information is the first data channel, it may be determined that the first control information is three-stage control information, including first-stage control information, second-stage control information, and third-stage control information. The first-stage control information includes the first information, the second-stage control information includes the second information, and the third-stage control information includes the third information. According to this implementation, an available resource can be controlled to adapt to control information of different payload sizes, and a resource waste caused by additional occupation of a control resource is reduced. For example, the structure of the first control information may be configured based on different conditions. If a payload of the first control information is greater than a preset threshold, the first control information is configured as three-stage control information, and the first information or the second information indicates that the channel for transmitting the third information is the first data channel. If the first control information is less than or equal to the preset threshold, the first control information is configured as two-stage control information, and the first information or the second information indicates that the channel for transmitting the third information is the second control channel. Whether the size of the first control information is greater than the preset threshold is merely an example provided in this embodiment of this application. The condition may alternatively be other content, for example, whether K is greater than the preset threshold, where K is a quantity of hops for transmitting the first data between the source apparatus and the target apparatus. This is not limited in this embodiment of this application.

Optionally, the first information or the second information may indicate, in a manner of indicating to on (on) or off (off) the third-stage control information, the channel for transmitting the third information. Specifically, if the first information or the second information indicates to on third-stage control information, it is determined that the first control information is three-stage control information, including first-stage control information, second-stage control information, and the third-stage control information. The first-stage control information includes the first information, the second-stage control information includes the second information, the third-stage control information includes the third information, and the corresponding third information is carried on the first data channel or the third control channel. If the first information or the second information indicates to off third-stage control information, the first control information is two-stage control information, including first-stage control information and second-stage control information. The first-stage control information includes the first information, the second-stage control information includes the second information and the third information, and the corresponding third information is carried on the second control channel. According to this implementation, the second apparatus can determine the structure of the first control information in a timely manner.

Optionally, the structure of the first control information may alternatively be preconfigured. In this case, the first information or the second information does not need to indicate the channel for transmitting the third information. According to this implementation, the size of the first control information can be reduced, especially a size of dynamically indicated control information, can be reduced.

It should be further noted that the structure of the first control information may alternatively be a single-stage control information structure. Details are not described herein in this embodiment of this application.

### 2. Configurations indicated by the first information, the second information, and the third information

**1. The first information indicates one or more of the following configurations:** a packet or packet delay budget (packet delay budget, PDB) of transmission between the first apparatus and the second apparatus, a time domain resource configuration of transmission between the first apparatus and the second apparatus, and a frequency domain resource configuration of transmission between the first apparatus and the second apparatus.

The PDB of the transmission between the first apparatus and the second apparatus is a maximum delay gap required for transmitting the first data between the first apparatus and the second apparatus. In other words, a delay caused when the first apparatus forwards the first data to the second apparatus needs to not exceed the PDB of the transmission between the first apparatus and the second apparatus. The PDB of the transmission between the first apparatus and the second apparatus may be configured based on an end-to-end PDB. The PDB of the transmission between the first apparatus and the second apparatus is indicated by using the first information, so that a surrounding adjacent device in the current hop reads the parameter, and determines, with reference to an available resource, end-to-end quality of service, and a reference signal received power (Reference Signal Received Power, RSRP) threshold, whether to occupy a resource corresponding to the adjacent device. When an SSL link or an SL link is between the first apparatus and the second apparatus, the first information includes the parameter. If a Uu link is between the first apparatus and the second apparatus, the first information may not include the parameter.

The time domain resource configuration of transmission between the first apparatus and the second apparatus is a time domain resource configuration required for transmitting the first data between the first apparatus and the second apparatus, and is indicated in a unit of a slot (slot) or a subslot (subslot). Optionally, the time domain resource configuration further includes an indication indicating whether to perform one-grant (one grant) multi-data repeated transmission and an indication indicating a quantity of repetitions. One grant corresponds to one piece of scheduling signaling. Compared with a case in which each time of transmission corresponds to one piece of scheduling signaling, a case in which one piece of scheduling signaling is used to schedule a plurality of times of transmissions of same data can reduce signaling overheads, and improve data transmission reliability. If a time domain resource is indicated in a unit of a subslot and whether to perform one-grant multi-data repeated transmission is indicated, a delay is reduced and reliability is improved. In AF forwarding, a control channel and a time domain channel are time division multiplexed. Because control information does not occupy all resource symbols on which the control information is located, a remaining resource symbol cannot be shared with a data channel for use. In the manner of one-grant multi-data repeated transmission, a configuration of a plurality of scheduling signaling grants can be avoided. This helps reduce AF control overheads. Optionally, the time domain resource configuration is usually configured by the source apparatus when including time domain start time and a time domain length. Further, optionally, time domain lengths of all hops of transmission in the multi-hop transmission configured by the source apparatus are the same.

The frequency domain resource configuration of transmission between the first apparatus and the second apparatus is a frequency domain resource configuration required for transmitting the first data between the first apparatus and the second apparatus. Optionally, if the first apparatus is a network device, and the second apparatus is a terminal device, the frequency domain resource configuration is a frequency domain resource configuration used to transmit the first data on the Uu link. Optionally, the frequency domain resource configuration includes a frequency domain start location and a frequency domain length. The Uu link may have different carriers. Compared with the sidelink, the Uu link may have different bandwidths, for example, a larger system bandwidth. Therefore, when AF forwarding is performed, a bandwidth that can be supported by the sidelink also needs to be considered in the frequency domain configuration of the Uu link. A possible frequency domain bandwidth configuration is that the Uu link is also configured as the bandwidth supported by the sidelink.

In a possible implementation, the first data in the M-hop transmission may be transmitted through two types of links, and the first information further includes the following configuration: a minimum time gap for forwarding the first data from the first link to the second link. Further, optionally, the first link is a link between a network device and a terminal device, for example, the Uu link, and the second link is a link between terminal devices, for example, a sidelink (sidelink, SL) link or an super sidelink (super sidelink, SSL) link. Optionally, the minimum time gap for forwarding the first data from the first link to the second link may be represented as a minimum time gap (Time gap slot&symbol UutSSL) for forwarding the first data from the Uu link to the SSL link. The minimum time gap for forwarding the first data from the first link to the second link may be understood as earliest time at which transmission starts on the second link after the first data is transmitted to a sending device on the second link through the first link, and is indicated in a unit of a slot and/or a subslot. For example, assuming that only the first apparatus in the M-hop transmission is a network device, and all other apparatuses are terminal devices, in other words, there is a Uu link between the first apparatus and the second apparatus, and all links in the (M-1)-hop transmission are SL links or SSL links, the minimum time gap for forwarding the first data from the first link to the second link may be understood as a gap from time at which the second apparatus receives the first data sent by the first apparatus to time at which the second apparatus starts to forward the first data.

In a possible implementation, the M-hop transmission includes a sidelink, and the first information further indicates a configuration of the first data on the sidelink. The sidelink herein includes an SL link and an SSL link. Optionally, the configuration of the first data on the sidelink includes one or more of the following configurations: an end-to-end priority (E2E Priority), a common carrier (Common Carrier, CC) configuration on the sidelink, a resource pool (Resource pool) configuration, a sidelink frequency domain resource configuration, a sidelink resource reservation (Resource reservation) period configuration, and a sidelink time domain transmission resource configuration. According to this implementation, because a resource is obtained in a contention manner on the sidelink, the first information is carried on a control channel that can be read by another apparatus. This helps another apparatus for resource contention outside the M-hop transmission be capable of reading the configuration of the first data on the sidelink in the first information, to avoid an increase in a delay required for the M-hop transmission or a data loss caused by occupation of a corresponding resource by an adjacent apparatus.

The E2E priority is a priority of data from a transmit end to a receive end. Each priority corresponds to one PDB, and is used to limit maximum time required for the data to be transmitted from the transmit end to the receive end. Each priority further corresponds to service reliability or an allowed packet error rate. It may be understood that the E2E priority indicated in the first information may be used to determine a maximum time gap of the first data from the source apparatus to the target apparatus.

The CC configuration on the sidelink is a CC configuration required for transmitting the first data on the sidelink and a corresponding CC configuration indicating whether to perform coordination. For example, the configuration is performed in a (1+3)-bit manner, where 1 bit indicates whether to perform coordinated transmission on different CCs, and 3 bits may indicate that one CC is selected from a maximum of eight CCs for data transmission on the current CC. That same data is transmitted on different CCs may be considered as one type of frequency division repeated transmission, to obtain a frequency diversity gain and improve reliability.

The resource pool configuration is a time-frequency domain resource that can be used to transmit the first data. A maximum frequency domain bandwidth may be a bandwidth part (bandwidth part, BWP). When there is more than one configured resource pool, the control channel may be sent on a corresponding bandwidth in each resource pool. Resource mapping of data is sequentially performing configuration on all resource pools. For example, one time is on a bandwidth 1 corresponding to a resource pool 1, and one time is on a bandwidth 2 corresponding to the resource pool 2. According to this implementation, it can be ensured that a bandwidth-limited apparatus can monitor, in a resource pool in which the bandwidth-limited apparatus is located, the control information sent in the AF forwarding manner, and a sufficiently large bandwidth can also be used in the AF forwarding manner. The resource pool configuration may be two frequency domain resource bandwidth configurations, of the control channel, that are obtained by another apparatus. For example, for a frequency domain resource configuration 1 and a frequency domain resource configuration 2, a bandwidth range of the frequency domain resource configuration 1 is limited to one subchannel (subchannel), and a bandwidth range of the frequency domain resource configuration 2 may be greater than one subchannel. For example, the bandwidth range of the frequency domain resource configuration 2 may be within a range of one to six subchannels. The frequency domain resource configuration 1 is mainly used to consider a sensing bandwidth support capability of each apparatus in the system, and is used for transmission of the first-stage control information, for example, is a cell specific (cell specific) configuration. A resource of the second-stage control information is configured by using the first-stage control information. For example, a parameter such as an aggregation level of the second-stage control information is indicated by using the first-stage control information. A bandwidth of the typical frequency domain resource configuration 1 is less than a bandwidth of the frequency domain resource configuration 2.

The sidelink frequency domain resource configuration is a frequency domain resource configuration required for transmitting the first data on the sidelink. Optionally, if the AF forwarding manner is used in the M-hop transmission, the sidelink frequency domain resource configuration is a sidelink amplification and forwarding frequency domain resource configuration, sidelink frequency domain resource configurations of all hops are the same, and the configuration is mainly used by the target apparatus to perform resource demapping based on the frequency domain resource configuration when receiving the first data. Further, a modulation symbol of data carried on the frequency domain resource is obtained. The relay apparatus may not need to read the configuration during forwarding. However, the frequency domain resource configuration may be carried, by using the first information, on the control channel that can be obtained by another apparatus for transmission. This helps another apparatus for resource contention outside the M-hop transmission be capable of reading the configuration, and avoids occupying the corresponding resource. Optionally, if the DF forwarding manner is used in the M-hop transmission, the sidelink frequency domain resource configuration is a sidelink decoding and forwarding frequency domain resource configuration. Optionally, the configuration may be configured by the source apparatus, and configurations of all hops are the same. Frequency domain resources corresponding to time domain reservation resources are also the same.

The sidelink time domain transmission resource configuration is a time domain resource configuration required for transmitting the first data on the sidelink. The time domain resource configuration includes a time domain transmission resource configuration and a time domain reservation resource configuration. The time domain transmission resource is a time domain resource currently used to transmit the first data, and the time domain reservation resource is a time domain resource used to retransmit the first data or a resource reserved to transmit other data.

The sidelink resource reservation periodicity configuration is a period between resources that are pre-reserved for retransmission or transmission of other data in the M-hop transmission.

**2. The second information indicates one or more of the following configurations:** a time domain resource configuration of the (M-1)-hop transmission, a PDB of the (M-1)-hop transmission, a minimum gap (inter SSL min GAP) between receiving time and forwarding time of the (M-1)-hop sidelink transmission, a quasi co-location (quasi-colocation, QCL) indicator, path information, and a transmit beam configuration.

The time domain resource configuration of the (M-1)-hop transmission is a time domain resource configuration required for each hop of transmission in the (M-1)-hop transmission other than the transmission between the first apparatus and the second apparatus in the M-hop transmission. Specifically, the time domain resource configuration includes a time domain transmission resource configuration and a time domain reservation resource configuration. Optionally, the time domain resource configuration may alternatively be simplified as indicating start time of each of (M-1) hops, and a time domain length is the same as a time domain length in the time domain resource configuration required by the transmission between the first apparatus and the second apparatus in the first information. Further, optionally, the start time may be a 1^{st} symbol on which the control information is received.

The PDB of the (M-1)-hop transmission is a maximum delay corresponding to each hop of transmission in the (M-1)-hop transmission other than the transmission between the first apparatus and the second apparatus in the M-hop transmission. Optionally, the PDB of the (M-1)-hop transmission and a PDB of the transmission between the first apparatus and the second apparatus may be configured based on a preconfigured E2E PDB. For example, PDBs of all hops are evenly allocated based on the E2E PDB.

The minimum gap between receiving time and forwarding time of the (M-1)-hop sidelink transmission is a minimum time gap between time at which each apparatus in the (M-1)-hop transmission receives the first data and time at which the apparatus forwards the data. The minimum gap between the receiving time and the forwarding time of the (M-1)-hop sidelink transmission is related to a configured subcarrier spacing, and configured time granularities such as a slot and a subslot.

The QCL indicator indicates a parameter of a quasi co-location relationship between a demodulation reference signal (Demodulation Reference Signal, DMRS) antenna port and a reference signal. The reference signal may be a channel state information-reference signal (Channel State Information-Reference Signal, CSI-RS), a synchronization signal and PBCH block (Synchronization Signal and PBCH block, SSB), or the like, and the quasi co-location relationship is a channel condition assumption. The QCL may be used to determine receive beam information corresponding to a transmit beam used for data transmission, to receive data through a corresponding receive beam.

The path information is identifier (ID) information of an apparatus corresponding to each node in the M-hop transmission. Optionally, if apparatuses corresponding to one node are a group of apparatuses, the group of apparatuses includes one or more apparatuses, and the ID information is ID information corresponding to the group of apparatuses. One group of apparatuses may alternatively be apparatuses located in a specific geographical area, and correspondingly one group of apparatuses located in the area may correspond to a zone (zone) ID.

The transmit beam configuration is a transmit beam of each relay apparatus. Optionally, the transmit beam configuration may be selected from a preconfigured higher layer signaling beam set.

In a possible implementation, the second information may further indicate one or more of the following configurations: a DMRS pattern (pattern), a DMRS port number (port number), and an MCS corresponding to the first data. Optionally, if the first control information is three-stage control information, and the third information is carried on the data channel, the second information further indicates the QCL corresponding to the first data and the third information.

The DMRS pattern is a pattern of a DMRS in the M-hop transmission, and specifically, includes different time domain resource types. For example, impact of whether there is an automatic gain control (Automatic Gain Control, AGC) symbol on a DMRS pattern is considered for DMRS patterns of a slot and a subslot. When the DMRS is affected by AGC, a DMRS symbol located before a slot or a subslot of an SL or SSL is affected. In one case, when a first symbol of the slot or the subslot is used for AGC, a DMRS symbol located in a 2^{nd} symbol is repeatedly transmitted on the first symbol. In another case, when the AGC impact is controllable, a reserved symbol may be disabled. In this case, the first symbol of the slot or the subslot does not need to be used to repeatedly transmit the DMRS located on the 2^{nd} symbol.

The DMRS port number is a quantity of antenna ports of each apparatus in the M-hop transmission. For example, the quantity is 1 or 2.

The QCL corresponding to the first data and the third information is a receiving QCL relationship between the first data and the third information, and may be understood as a QCL assumption relationship between a DMRS of a channel carried in the first data and the third information and a CSI-RS or an SSB of each hop of transmission in the M-hop transmission.

**3. The third information indicates one or more of the following configurations:** a new data indicator (New Data Indicator, NDI), a redundancy version (redundancy version, RV), a hybrid automatic repeat request (hybrid automatic repeat request, HARQ) process, HARQ feedback (feedback) enable, HARQ feedback time, and a HARQ feedback resource.

The HARQ process includes a HARQ process ID. The target apparatus may perform retransmission and combination based on data of a same process, or distinguish between data corresponding to different processes.

The HARQ feedback enable includes whether a HARQ feedback is supported or whether a HARQ feedback is enabled. If the HARQ feedback is supported, a feedback information apparatus or a feedback information receiving apparatus, for example, a corresponding sending apparatus, a source apparatus, or a centralized scheduling apparatus, that needs to be obtained; or both the transmit end apparatus and the source apparatus may receive the feedback information, or both the transmit end apparatus and the centralized scheduling apparatus may receive the feedback information. Herein, the sending apparatus is an apparatus that sends the first data to the receiving apparatus, and the receiving apparatus is an apparatus that receives, in the M-hop transmission, the first data forwarded by the sending apparatus. For example, in the transmission between the first apparatus and the second apparatus, the first apparatus sends the first data to the second apparatus, the first apparatus is the sending apparatus, and the second apparatus is the receiving apparatus. The sending apparatus may be a source apparatus or a relay apparatus, and the receiving apparatus may be a relay apparatus or a target apparatus.

The HARQ feedback time is time for sending the feedback information, and reference time corresponding to the HARQ feedback time may be a last symbol for receiving the data channel.

The HARQ feedback resource is a transmission resource of a channel that carries the HARQ feedback information.

The RV is a redundancy version corresponding to the first data. Optionally, in AF forwarding, the relay apparatus does not need to decode the first data, and therefore does not need to obtain the RV. However, the target apparatus obtains the RV, so that retransmission and combination can be performed on data of a same process.

The NDI indicates whether new data is sent or old data is retransmitted. Optionally, in AF forwarding, the relay apparatus does not need to decode the first data, and therefore does not need to obtain the NDI.

It should be further supplemented that, in addition to the configurations indicated by the first information, the second information, and the third information described above, the first information, the second information, and the third information may further indicate other configurations. This is not limited in this embodiment of this application.

**3. Implementation in which the first apparatus obtains the first control information:**

The implementation in which the first apparatus obtains the first control information is mainly divided into the following plurality of implementations based on whether the first apparatus is a relay apparatus or a source apparatus.

### 1. The first apparatus is the relay apparatus:

In a possible implementation, a specific implementation in which the first apparatus obtains the first control information is as follows: The first apparatus receives second control information sent by a third apparatus; and the first apparatus determines the first control information based on the second control information.

In this implementation, there is (M+1)-hop transmission between the third apparatus and the target apparatus. The (M+1)-hop transmission includes the M-hop transmission and transmission between the third apparatus and the first apparatus. The third apparatus may be a source apparatus or a relay apparatus. Correspondingly, the second control information includes information indicating a configuration required for the transmission between the third apparatus and the first apparatus, the configuration information indicating the M-hop transmission, and the third information. Therefore, the first apparatus may receive the first data based on the configuration information of the transmission between the third apparatus and the first apparatus. A specific implementation in which the first apparatus determines the first control information based on the second control information is: generating first information based on the configuration that is required for the transmission between the first apparatus and the second apparatus and that is in the configuration information required for indicating the M-hop transmission, generating second information based on the configuration required for the (M-1)-hop transmission in the configuration information required for indicating the M-hop transmission, and generating third information based on the configuration required for the indicated third information, where the third information in the second control information is the same as the third information in the first control information, and the first apparatus generates the first control information based on the first information, the second information, and the third information. According to this implementation, each relay apparatus can receive the first data based on control information obtained in the current hop, and generate, based on the control information, control information required for remaining-hop transmission, so that configurations required for all hops of transmission are indicated in a centralized manner by using the control information in the multi-hop transmission.

Optionally, a frequency domain resource for carrying the first control information is the same as a frequency domain resource for carrying the second control information. It can be learned from the foregoing descriptions that, in the multi-hop transmission between the source apparatus and the target apparatus, one piece of control information needs to be generated for each hop of transmission, to indicate a transmission configuration in a current hop and a configuration of a remaining hop. Control information of all hops may be transmitted on a same frequency domain resource. Further, optionally, when both the first control information and the second control information are of a two-stage control information structure, a frequency domain resource for carrying first-stage control information in the first control information is the same as a frequency domain resource for carrying first-stage control information in the second control information, and a frequency domain resource for carrying second-stage control information in the first control information is the same as a frequency domain resource for carrying second-stage control information in the second control information; or when both the first control information and the second control information are of a three-stage control information structure, similarly, a frequency domain resource for carrying third-stage control information in the first control information is the same as a frequency domain resource for carrying third-stage control information in the second control information. For example, as shown in FIG. 6, the source apparatus transmits control information 1 to the relay apparatus, and the relay apparatus sends control information 2 to the target apparatus. Both the control information 1 and the control information 2 are of a three-stage structure. It can be learned that the control information 1 is received by the relay apparatus and the control information 2 is sent by the relay apparatus, the control information 1 and the control information 2 are on a same frequency domain resource, both first-stage control information in the control information 1 and first-stage control information in the control information 2 are on a same frequency domain resource, both second-stage control information in the control information 1 and second-stage control information in the control information 2 are on a same frequency domain resource, and both third-stage control information in the control information 1 and third-stage control information in the control information 2 are on a same frequency domain resource.

### 2. The first apparatus is the source apparatus:

In a possible implementation, the first apparatus has a resource scheduling capability, and a specific implementation in which the first apparatus obtains the first control information is as follows: The first apparatus may determine the first control information based on factors such as a data type, a service type, a quality of service requirement, and multi-hop channel quality information that correspond to the first data. The channel quality information may be parameters such as RSRP and a channel quality indicator (Channel Quality Indicator, CQI). This is not limited in this embodiment of this application. According to this implementation, the first apparatus may schedule the configurations required by all the hops in the M-hop transmission in a centralized manner, and the configuration does not need to be scheduled by another device, so that a data transmission delay can be reduced.

In another possible implementation, the first apparatus does not have a resource scheduling capability, and a specific implementation in which the first apparatus obtains the first control information is as follows: The first apparatus receives second control information sent by a third apparatus; and the first apparatus determines the first control information based on the second control information. In this implementation, the third apparatus is a scheduling apparatus, and has a capability of scheduling the resource for the multi-hop transmission. According to this implementation, the scheduling apparatus configures a configuration required by each hop of transmission in the M-hop transmission, to help implement centralized scheduling of the M-hop transmission.

In a possible implementation, the second control information includes fourth information and fifth information; the fourth information indicates one or more of the following configurations: the minimum time gap for forwarding the first data from the first link to the second link, a transmission configuration of the second-stage control information, a structure indication of the first control information, the carrier configuration on the sidelink, the resource pool configuration, and the sidelink frequency domain resource configuration; and the fifth information indicates one or more of the following configurations: a time domain resource configuration of the M-hop transmission, a PDB of the M-hop transmission, the path information, a transmit beam configuration of the M-hop transmission, minimum sidelink start time of the M-hop transmission, and the QCL. Further, optionally, the first link is a link between a network device and a terminal device, for example, a Uu link, and the second link is a link between terminal devices, for example, an SL link or an SSL link. The structure indication of the first control information means that a control structure of the first control information generated by the first apparatus is two-stage control information or three-stage control information. Optionally, if it is indicated that the structure of the first control information is third-stage control information, the structure indication of the first control information further indicates that the control channel that carries the third information is a channel type, and is specifically a data channel or a control channel. The transmission configuration of the fifth information includes an AL, a code rate, an MCS, a time domain resource, and a frequency domain resource.

In a possible implementation, the structure of the second control information is a two-stage control information structure, the second control information includes first-stage control information and second-stage control information, the first-stage control information includes the fourth information, and the second-stage control information includes the fifth information. Optionally, the third apparatus is a network device, and the second control information is DCI. Because there is no data transmission on a Uu link, the structure of the second control information is a two-stage control information structure, a time domain resource and a frequency domain bandwidth that carry the second control information are not constrained, and multi-hop variable control quantities may be handled by using the second-stage control information. Because the third apparatus is a scheduling apparatus and does not need to transmit data, another surrounding adjacent apparatus may not need to obtain content of the second control information, configure a fixed control indication message in the first-stage control information, store a variable control parameter in the second-stage control information, and configure relatively fixed control information in the first-stage control information on which blind detection needs to be performed, to avoid detecting a control channel that carries a variable payload, and reduce complexity of blind detection.

Some of the configurations indicated by the fourth information and the fifth information are the same as the configuration indicated by the first information or the second information, and some of the configurations are a set of the configurations indicated by the first information and the second information. Details are not described herein again in this embodiment of this application. Specifically, the minimum time gap for forwarding the first data from the first link to the second link, the carrier configuration on the sidelink, the resource pool configuration, and the sidelink frequency domain resource configuration are the same as those described in the first information. The path information and the QCL are the same as those described in the second information. The time domain resource configuration of the M-hop transmission includes the time domain resource configuration of the transmission between the first apparatus and the second apparatus in the first information and the time domain resource configuration of the (M-1)-hop transmission in the second information, the PDB of the M-hop transmission includes the PDB of the transmission between the first apparatus and the second apparatus in the first information and the PDB of the (M-1)-hop transmission in the second information, and the transmit beam configuration of the M-hop transmission includes the transmit beam configuration of the transmission between the first apparatus and the second apparatus in the first information and the transmit beam configuration of the (M-1)-hop transmission in the second information.

When the second control information is of a two-stage control information structure, first-stage control information includes the fourth information, and second-stage control information includes the fifth information. Correspondingly, the fourth information and the fifth information are carried on different control channels. A time domain resource of a control channel that carries the first-stage control information and a time domain resource of a control channel that carries the second-stage control information are mapped to an available bandwidth in a manner of frequency domain first and time domain second. Alternatively, a resource of a control channel that carries the second-stage control information is indicated by the first-stage control information, and a transmission configuration of the second-stage control information indicated in the fourth information, namely, a transmission configuration of the fifth information, specifically includes an AL, a code rate, an MCS, a time domain resource, and a frequency domain resource. Optionally, the AL, the code rate, and the MCS of the fourth information is the same as those of the fifth information. According to this implementation, the multi-stage control information can reduce complexity of blind resolution. In addition, in a design of the multi-stage control information, a size of the multi-stage control information is supported to be variable. Therefore, this helps implement different sizes of corresponding control information in a multi-hop transmission scenario with different quantities of hops.

In a possible implementation, the fourth information further indicates one or more of the following parameters: a DMRS pattern, a DMRS port number, an NDI, an RV, a HARQ process, HARQ feedback enable, HARQ feedback time, and a HARQ feedback resource. The DMRS pattern and the DMRS port number that are indicated in the fourth information are the same as those in the second information. Details are not described herein in this embodiment of this application. The NDI, the RV, the HARQ process, the HARQ feedback enable, the HARQ feedback time, and the HARQ feedback resource are the same as the parameters indicated in the third information. Details are not described herein in this embodiment of this application.

In a possible implementation, a specific implementation in which the first apparatus determines the first control information based on the second control information is as follows: The first apparatus determines sixth information, where the sixth information includes one or more of the following: the end-to-end priority, the resource reservation period, the delay budget of the transmission between the first apparatus and the second apparatus, and the delay budget of the (M-1)-hop transmission; and the first apparatus determines the first control information based on the sixth information and the second control information. In this implementation, the first apparatus may determine the sixth information based on factors such as a data type or a service type of the first data and a quality of service requirement. According to this implementation, because the scheduling apparatus does not know factors such as the service type and the data type of the first data, the scheduling apparatus cannot configure an appropriate parameter (for example, a transmission delay). The first apparatus determines the sixth information, and this helps configure a more appropriate parameter, to improve user experience.

Based on the foregoing descriptions, the following mainly describes a special scenario to which embodiments of this application are applicable. To be specific, in multi-hop transmission, there may be a plurality of relay devices corresponding to a node that forwards the first data, in other words, the source apparatus or the relay apparatus may forward, in a multicast, groupcast, or broadcast manner, the first data to a plurality of relay devices corresponding to a next node.

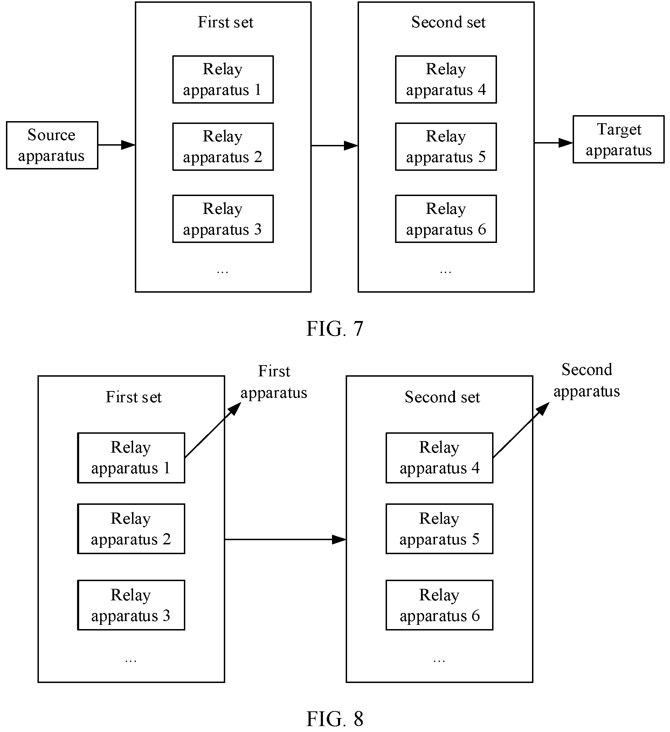

For example, FIG. 7 is a diagram of three-hop transmission. The three-hop transmission includes a source apparatus, a first set, a second set, and a target apparatus. The first set and the second set include a plurality of relay apparatuses. For example, the first set includes apparatuses such as a relay apparatus 1, a relay apparatus 2, and a relay apparatus 3, and the second set includes apparatuses such as a relay apparatus 4, a relay apparatus 5, and a relay apparatus 6. The first set and the second set are used to assist the source apparatus in forwarding first data to the target apparatus. Specifically, the source apparatus sends the first data to the plurality of relay apparatuses in the first set. After receiving the first data, the plurality of relay apparatuses in the first set forward the first data to the plurality of relay apparatuses in the second set. After receiving the first data, the plurality of relay apparatuses in the second set forward the data to the target apparatus.

With reference to the scenario described above, in a possible implementation, the second apparatus is a relay apparatus, and a specific implementation in which the first apparatus sends first control information to the second apparatus is as follows: The first apparatus sends the first control information to the second set, where the second set includes a plurality of apparatuses, and the second apparatus is one apparatus in the second set. A manner in which the first apparatus sends the control information to the second set may be one of multicast, groupcast, or broadcast. This is not limited in this embodiment of this application. Optionally, relay devices included in a set corresponding to one node may be obtained through division based on a geographical location. In addition to the geographical location, another division manner may be used. This is not limited in this embodiment of this application. According to this implementation, data transmission coverage is improved, and the first data is forwarded to a plurality of relay devices, so that data forwarding reliability can also be enhanced.

In a possible implementation, the first apparatus is a relay apparatus, the first apparatus is an apparatus in the first set, and the first set includes a plurality of apparatuses. Optionally, the first control information is transmitted on a first time-frequency resource, and the first time-frequency resource is further used by another apparatus in the first set to send the first control information to an apparatus in the second set. For example, FIG. 8 is a diagram of transmitting data from the first set to the second set. The first set includes apparatuses such as a relay apparatus 1, a relay apparatus 2, and a relay apparatus 3, and the second set includes apparatuses such as a relay apparatus 4, a relay apparatus 5, and a relay apparatus 6. The relay apparatus 1 is a first apparatus, and the relay apparatus 4 is a second apparatus. Each apparatus that correctly receives the data in the first set sends the first control information to the apparatus in the second set on the first time-frequency resource. Because both the first set and the second set perform the configuration in the first control information, each apparatus that is in the first set and that correctly receives data also sends the first data to each apparatus in the second set on a same resource. Correspondingly, each apparatus in the second set also receives the first data on a same resource. Specifically, when forwarding the first data to the plurality of relay apparatuses in the second set, the plurality of relay apparatuses in the first set may use a same time-frequency resource, a same MCS, a same reservation resource, same path information, a same DMRS configuration, and a same HARQ configuration. According to this implementation, configurations of relay apparatuses in each set are managed in a centralized manner, and a case in which data forwarding is disordered due to a large quantity of relay apparatuses in one set is avoided.

In a possible implementation, the second information further indicates a zone identifier (Zone ID). The Zone ID is an identifier of a set, of a plurality of relay apparatuses, corresponding to one node in the M hops, for example, an identifier of the first set and an identifier of the second set. With reference to the path information indicated in the second information in the foregoing descriptions, in this scenario, the path information includes a source apparatus identifier, the target apparatus identifier, and a Zone ID of a set corresponding to a plurality of relay nodes between the source apparatus and the target apparatus. The second apparatus can determine, by using the Zone ID, a set corresponding to a next hop, so that the first data received by the first set can be forwarded to the corresponding set of the next hop. Optionally, the transmit beam configuration included in the second information is specifically a set-based beam sending configuration, and the second information may further include a set-based receive beam configuration. The transmit beam configuration and the receive beam configuration may be stored in a local storage of each apparatus, and activation is triggered after the first control information is received.

In a possible implementation, the second information further indicates HARQ acknowledgment (acknowledgment, ACK) time and an acknowledgment resource, and the acknowledgment resource is a transmission resource used by the second set to transmit HARQ acknowledgment information. The method further includes: If the first apparatus does not receive the ACK information on a preconfigured resource, namely, the acknowledgment resource, after the first apparatus sends the first data to the second set until the acknowledgment time, and a quantity of retransmission times does not exceed a preset quantity of times, the first apparatus retransmits the first data to a plurality of second apparatuses. Optionally, the preset quantity of times is a maximum quantity of retransmission times, and may be configured by using higher layer signaling. According to this implementation, reliability of successful data transmission is improved.

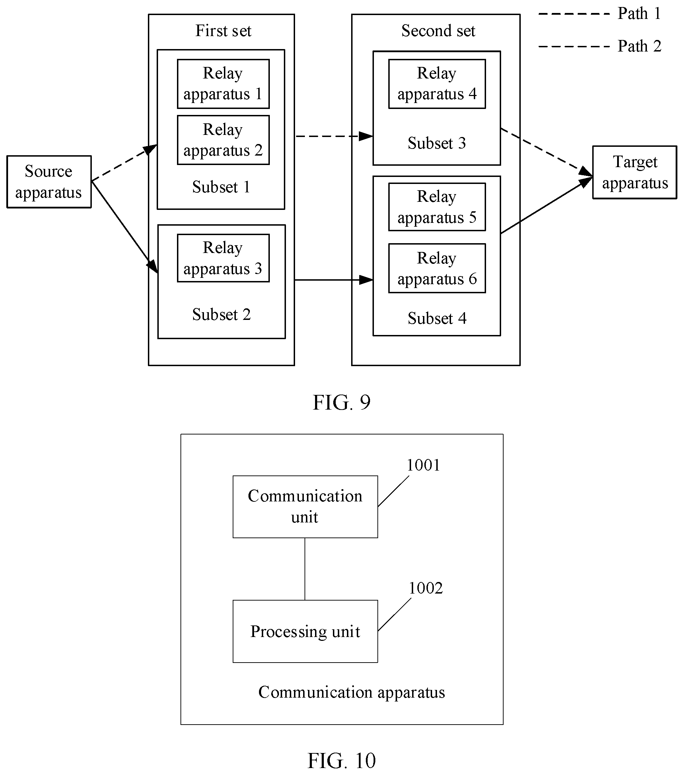

In a possible implementation, a set corresponding to a relay node in the M hops includes a plurality of subsets, one subset includes one or more relay apparatuses, and each subset includes at least one relay apparatus configured to forward data. A plurality of paths may be generated based on a subset for a path for forwarding the data to the target apparatus by the source apparatus, and forwarding resources corresponding to the paths are orthogonal. For example, as shown in FIG. 9, the first set and the second set each include two subsets, the first set includes a subset 1 and a subset 2, and the second set includes a subset 3 and a subset 4. Correspondingly, the path for transmitting the first data to the target apparatus by the source apparatus by using the first set and the second set is also divided into two paths: a path 1 and a path 2. The path 1 is that the source apparatus transmits the first data to the subset 1, then the subset 1 transmits the first data to the subset 3, and finally the subset 3 transmits the first data to the target apparatus. The path 2 is that the source apparatus transmits the first data to the subset 2, then the subset 2 transmits the first data to the subset 4, and the subset 4 transmits the first data to the target apparatus. The forwarding resources used by the paths are orthogonal to each other, and this helps avoid interference and resource contention. In addition, a multipath transmission manner helps improve data transmission reliability.

302: The first apparatus sends the first control information to the second apparatus. Correspondingly, the second apparatus receives the first control information sent by the first apparatus.

In this embodiment of this application, after the second apparatus receives the first control information sent by the first apparatus, the second apparatus receives, based on the first information in the first control information, the first data sent by the first apparatus.

After the second apparatus receives the first data, the second apparatus may further generate third control information based on the first control information, and send the third control information to the fourth apparatus. The third control information includes a configuration used to transmit the first data between the second apparatus and the fourth apparatus and a configuration required by the target apparatus to receive the first data. The fourth apparatus is a next-hop transmission apparatus corresponding to the second apparatus. The configuration required by the target apparatus to receive the first data herein is the same as the third information in the first control information. If M is an integer greater than 2, the third control information further includes a configuration of (M-2)-hop transmission, where the (M-2)-hop transmission is (M-2)-hop transmission other than transmission between the second apparatus and the fourth apparatus in the (M-1)-hop transmission. A specific implementation of transmitting the third control information and the first data between the second apparatus and the fourth apparatus is the same as a transmission manner between the first apparatus and the second apparatus. For details, refer to the foregoing descriptions. Details are not described herein in this embodiment of this application.

According to this implementation, the first control information includes a configuration indication required for the M-hop transmission and the configuration required by the target for receiving. Therefore, configurations required for all hops of transmission in the M-hop transmission can be scheduled in a centralized manner by using the first control information. The first control information includes the configuration used to transmit the first data between the first apparatus and the second apparatus. Therefore, when the first apparatus is not a source apparatus, the first apparatus and the second apparatus can directly transmit data without waiting for a corresponding transmission resource configured by the first apparatus, so that a data forwarding delay between the first apparatus and the second apparatus is reduced. In addition, in the (M-1)-hop transmission, for example, a resource required for subsequent transmission of the second apparatus may also be directly configured based on the configuration of the (M-1)-hop transmission of the first control information without waiting for a sending device to separately configure a corresponding transmission resource, to reduce a data transmission delay.

To implement functions in the foregoing methods provided in embodiments of this application, the first apparatus and the second apparatus may include a hardware structure and/or a software module, to implement the foregoing functions in a form of the hardware structure, the software module, or a combination of the hardware structure and the software module. Whether a specific function in the foregoing functions is performed in the manner of the hardware structure, the software module, or the combination of the hardware structure and the software module depends on a specific application and design constraints of the technical solutions.

FIG. 10 is a diagram of a structure of a communication apparatus according to an embodiment of this application. The communication apparatus may be a first apparatus. In a possible implementation, the communication apparatus may include modules or units that are in one-to-one correspondence with the methods/operations/steps/actions performed by the first apparatus in the foregoing method embodiments. The units may be hardware circuits, or may be software, or may be implemented by a hardware circuit in combination with software.

The communication apparatus shown in FIG. 10 may be a first apparatus, or an apparatus that can be used in a matching manner with the first apparatus. The communication apparatus may alternatively be a chip system. The apparatus may be configured to perform some or all functions of the first apparatus in the method embodiment described in FIG. 3. The communication apparatus shown in FIG. 10 may include a communication unit 1001 and a processing unit 1002. The processing unit 1002 is configured to perform data processing. The communication unit 1001 is integrated with a receiving unit and a sending unit. The communication unit 1001 may also be referred to as a transceiver unit. Alternatively, the communication unit 1001 may be split into a receiving unit and a sending unit.

The processing unit 1002 is configured to obtain first control information, where the first control information indicates a configuration of M-hop data transmission between a first apparatus and a target apparatus, the M-hop data transmission is used to transmit first data, the M-hop transmission includes transmission between the first apparatus and a second apparatus, the first control information includes first information, second information, and third information, the first information indicates a configuration used to transmit the first data between the first apparatus and the second apparatus, the second information indicates a configuration of (M-1)-hop transmission, the (M-1)-hop transmission is (M-1)-hop transmission other than the transmission between the first apparatus and the second apparatus in the M-hop transmission, the third information indicates a configuration required by the target apparatus to receive the first data, and M is an integer greater than 1; and the communication unit 1001 is configured to send the first control information to the second apparatus.

In a possible implementation, the first information further indicates a configuration used to transmit the second information, and the configuration used to transmit the second information includes one or more of the following: an aggregation level, a code rate, a modulation and coding scheme, a time domain resource, and a frequency domain resource.

In a possible implementation, the first information is carried on a first control channel, and the second information and the third information are carried on a second control channel.

In a possible implementation, the first information is carried on a first control channel, the second information is carried on a second control channel, and the third information is carried on a first data channel.

In a possible implementation, the second information further indicates a configuration used to transmit the third information, and the configuration used to transmit the third information includes one or more of the following: a code rate, a modulation and coding scheme, a time domain resource, and a frequency domain resource.

In a possible implementation, the first information or the second information further indicates a channel for transmitting the third information.

In a possible implementation, the first information indicates one or more of the following configurations: a delay budget of the transmission between the first apparatus and the second apparatus, a minimum time gap for forwarding the first data from a first link to a second link, a frequency domain resource configuration between the first apparatus and the second apparatus, and a time domain resource configuration between the first apparatus and the second apparatus, where the first link is a link between a network device and a terminal device, and the second link is a link between terminal devices; the second information indicates one or more of the following configurations: a time domain resource configuration of the (M-1)-hop transmission, a delay budget of the (M-1)-hop transmission, path information, a transmit beam configuration, a minimum gap between receiving time and forwarding time of the (M-1)-hop sidelink transmission, and a quasi co-location indicator; and the third information indicates one or more of the following configurations: a new data indicator, a redundancy version, a HARQ process number, HARQ feedback (feedback) enable, HARQ feedback time, and a HARQ feedback resource.

In a possible implementation, the first information further indicates a configuration of the first data on a sidelink.

In a possible implementation, the configuration of the first data on the sidelink includes one or more of the following information: an end-to-end priority, a carrier configuration on the sidelink, a resource pool configuration, a sidelink frequency domain resource configuration, a sidelink resource reservation period configuration, and a sidelink time domain transmission resource configuration.

In a possible implementation, when obtaining the first control information, the processing unit 1002 is specifically configured to: receive second control information sent by a third apparatus; and determine the first control information based on the second control information.

In a possible implementation, the third apparatus is a network device, and the second control information includes fourth information and fifth information; the fourth information indicates one or more of the following configurations: the minimum time gap for forwarding the first data from the first link to the second link, a transmission configuration of the fifth information, a structure indication of the first control information, a configuration used to transmit the fifth information, the carrier configuration on the sidelink, the resource pool configuration, and the sidelink frequency domain resource configuration; and the fifth information indicates one or more of the following configurations: a time domain resource configuration of the M-hop transmission, a delay budget of the M-hop transmission, the path information, a transmit beam configuration of the M-hop transmission, minimum sidelink start time of the M-hop transmission, and the quasi colocation indicator.

In a possible implementation, when determining the first control information based on the second control information, the processing unit 1002 is specifically configured to: determine sixth information, where the sixth information includes one or more of the following: the end-to-end priority, the resource reservation period, the delay budget of the transmission between the first apparatus and the second apparatus, and the delay budget of the (M-1)-hop transmission; and determine the first control information based on the sixth information and the second control information.

In a possible implementation, when sending the first control information to the second apparatus, the communication unit 1001 is specifically configured to: send the first control information to a second set, where the second set includes a plurality of apparatuses, and the second apparatus is one apparatus in the second set.

In a possible implementation, the first apparatus is an apparatus in a first set, the first set includes a plurality of apparatuses, the first control information is transmitted on a first time-frequency resource, and the first time-frequency resource is further used by another apparatus in the first set to send the first control information to an apparatus in the second set.

In a possible implementation, the second information further indicates acknowledgment time and an acknowledgment resource, and the acknowledgment resource is a transmission resource used by the second set to transmit acknowledgment information. The communication unit 1001 is further configured to: if receiving the first data from the first set, send the acknowledgment information to the first set on the acknowledgment resource within the acknowledgment time.

In a possible implementation, the second information further includes a zone identifier Zone ID indication.

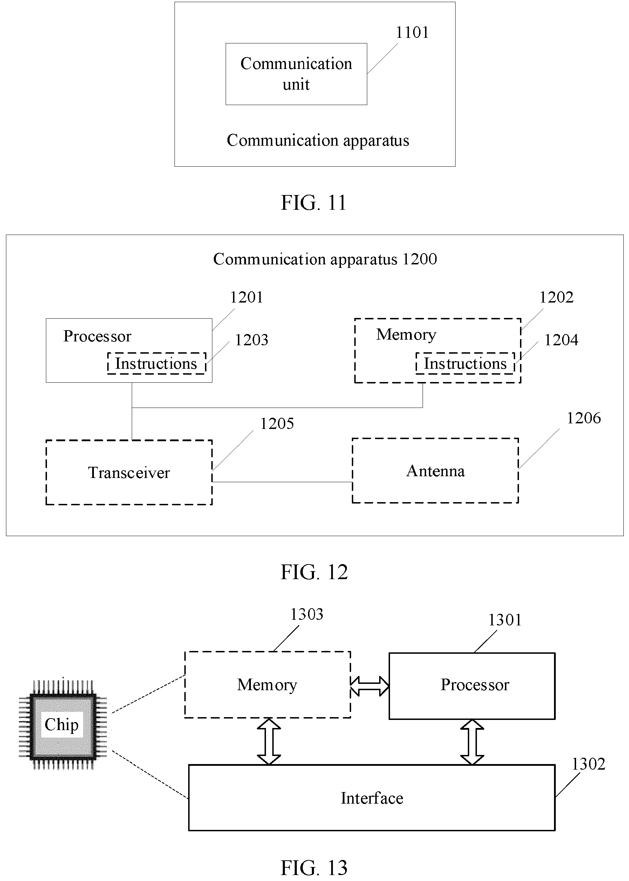

FIG. 11 is a diagram of a structure of a communication apparatus according to an embodiment of this application. The communication apparatus may be a second apparatus. In a possible implementation, the communication apparatus may include modules or units that are in one-to-one correspondence with the methods/operations/steps/actions performed by the second apparatus in the foregoing method embodiments. The units may be hardware circuits, or may be software, or may be implemented by a hardware circuit in combination with software.

The communication apparatus shown in FIG. 11 may be a second apparatus, or an apparatus that can be used in a matching manner the second apparatus. The communication apparatus may alternatively be a chip system. The apparatus may be configured to perform some or all functions of the second apparatus in the method embodiment described in FIG. 3. The communication apparatus shown in FIG. 11 may include a communication unit 1101. The communication unit 1101 is integrated with a receiving unit and a sending unit. The communication unit 1101 may also be referred to as a transceiver unit. Alternatively, the communication unit 1101 may be split into a receiving unit and a sending unit.

The communication unit 1101 is configured to receive first control information from a first apparatus, where the first control information indicates a configuration of M-hop data transmission between the first apparatus and a target apparatus, the M-hop data transmission is used to transmit first data, the M-hop transmission includes transmission between the first apparatus and a second apparatus, the first control information includes first information, second information, and third information, the first information indicates a configuration used to transmit the first data between the first apparatus and the second apparatus, the second information indicates a configuration of (M-1)-hop transmission, the (M-1)-hop transmission is (M-1)-hop transmission other than the transmission between the first apparatus and the second apparatus in the M-hop transmission, the third information indicates a configuration required by the target apparatus to receive the first data, and M is an integer greater than 1.

In a possible implementation, the first information further indicates a configuration used to transmit the second information, and the configuration used to transmit the second information includes one or more of the following: an aggregation level, a code rate, a modulation and coding scheme, a time domain resource, and a frequency domain resource.

In a possible implementation, the first information is carried on a first control channel, and the second information and the third information are carried on a second control channel.

In a possible implementation, the first information is carried on a first control channel, the second information is carried on a second control channel, and the third information is carried on a first data channel.

In a possible implementation, the second information further indicates a configuration used to transmit the third information, and the configuration used to transmit the third information includes one or more of the following: a code rate, a modulation and coding scheme, a time domain resource, and a frequency domain resource.

In a possible implementation, the first information or the second information further indicates a channel for transmitting the third information.

In a possible implementation, the first information indicates one or more of the following configurations: a delay budget of the transmission between the first apparatus and the second apparatus, a minimum time gap for forwarding the first data from a first link to a second link, a frequency domain resource configuration between the first apparatus and the second apparatus, and a time domain resource configuration between the first apparatus and the second apparatus, where the first link is a link between a network device and a terminal device, and the second link is a link between terminal devices; the second information indicates one or more of the following configurations: a time domain resource configuration of the (M-1)-hop transmission, a delay budget of the (M-1)-hop transmission, path information, a transmit beam configuration, a minimum gap between receiving time and forwarding time of the (M-1)-hop sidelink transmission, and a quasi co-location indicator; and the third information indicates one or more of the following configurations: a hybrid automatic repeat request (HARQ) process number, HARQ feedback (feedback) enable, HARQ feedback time, and a HARQ feedback resource.

In a possible implementation, the first information further indicates a configuration of the first data on a sidelink.

In a possible implementation, the configuration of the first data on the sidelink includes one or more of the following information: an end-to-end priority, a carrier configuration on the sidelink, a resource pool configuration, a sidelink frequency domain resource configuration, and a sidelink resource reservation period configuration.

In a possible implementation, when receiving the first control information from the first apparatus, the communication unit 1101 is specifically configured to: receive the first control information from a first set, where the first set includes a plurality of apparatuses, and the first apparatus is one apparatus in the first set.

In a possible implementation, the second apparatus is an apparatus in a second set, the second set includes a plurality of apparatuses, the first control information is transmitted on a first time-frequency resource, and the first time-frequency resource is further used by another apparatus in the second set to receive the first control information sent by the first set.

In a possible implementation, the second information further indicates acknowledgment time and an acknowledgment resource, and the acknowledgment resource is a transmission resource used by the second set to transmit acknowledgment information. The communication unit 1101 is further configured to: if the acknowledgment information is not received after the first data is sent to the second set until the acknowledgment time, and a quantity of times of retransmission does not exceed a preset quantity of times, retransmit the first data to the plurality of second apparatuses.

In a possible implementation, the second information further includes a zone identifier Zone ID indication.

In a possible implementation, M is greater than 2.

FIG. 12 is a diagram of a structure of a communication apparatus. The communication apparatus 1200 may be the first apparatus in the foregoing method embodiments, or may be a chip, a chip system, a processor, or the like that supports the first apparatus to implement the foregoing methods. The communication apparatus may be configured to implement the method described in the foregoing method embodiments. For details, refer to the descriptions in the foregoing method embodiments.

Alternatively, the communication apparatus 1200 may be the second apparatus in the foregoing method embodiments, or may be a chip, a chip system, a processor, or the like that supports the second apparatus to implement the foregoing methods. The communication apparatus may be configured to implement the method described in the foregoing method embodiments. For details, refer to the descriptions in the foregoing method embodiments.

The communication apparatus 1200 may include one or more processors 1201. The processor 1201 may be a general-purpose processor, a dedicated processor, or the like. For example, the processor 1201 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 1200 may include one or more memories 1202. The memory 1202 may store instructions 1204. The instructions may be run on the processor 1201, so that the communication apparatus 1200 performs the method described in the foregoing method embodiments. Optionally, the memory 1202 may further store data. The processor 1201 and the memory 1202 may be separately disposed, or may be integrated together.

Optionally, the communication apparatus 1200 may further include a transceiver 1205 and an antenna 1206. The transceiver 1205 may be referred to as a transceiver unit, a transceiver machine, a transceiver circuit, or the like, and is configured to implement a transceiver function. The transceiver 1205 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

The communication apparatus 1200 is a first apparatus. The processor 1201 is configured to perform a data processing operation of the first apparatus in the foregoing method embodiments. The transceiver 1205 is configured to perform data receiving and sending operations of the first apparatus in the foregoing method embodiments.

Alternatively, the communication apparatus 1200 is a second apparatus. The processor 1201 is configured to perform a data processing operation of the second apparatus in the foregoing method embodiments. The transceiver 1205 is configured to perform data receiving and sending operations of the second apparatus in the foregoing method embodiments.

In another possible design, the processor 1201 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In another possible design, optionally, the processor 1201 may store instructions 1203. When the instructions 1203 are executed on the processor 1201, the communication apparatus 1200 is enabled to perform the method described in the foregoing method embodiments. The instructions 1203 may be built into the processor 1201. In this case, the processor 1201 may be implemented by hardware.

In still another possible design, the communication apparatus 1200 may include a circuit. The circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (Radio Frequency Integrated Circuit, RFIC), a mixed-signal IC, an application-specific integrated circuit (application specific integrated circuit, ASIC), a printed circuit board (printed circuit board, PCB), an electronic device, or the like.

The communication apparatus described in the foregoing embodiments may be a first apparatus or a second apparatus. However, a scope of the communication apparatus described in embodiments of this application is not limited thereto, and a structure of the communication apparatus may not be limited by FIG. 12. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may alternatively include a storage component configured to store data and instructions;
(3) an ASIC, for example, a mobile station modem (Mobile Station Modem, MSM);
(4) a module that can be embedded in another device;
(5) a receiver machine, a terminal, an intelligent terminal, a cellular phone, a wireless device, a handheld device, a mobile unit, a vehicle-mounted device, a network device, a cloud device, an artificial intelligence device, or the like; or
(6) others.

When the communication apparatus may be the chip or the chip system, refer to a diagram of a structure of a chip, namely, FIG. 13. The chip shown in FIG. 13 includes a processor 1301 and an interface 1302. Optionally, the communication apparatus may further include a memory 1303. There may be one or more processors 1301, and there may be a plurality of interfaces 1302.

In a design, when the chip is configured to implement a function of the terminal device in embodiments of this application,
the interface 1302 is configured to input or output a signal; and
the processor 1301 is configured to perform a data processing operation of the terminal device in the foregoing method embodiments.

In another design, when the chip is configured to implement a function of the network device in embodiments of this application,
the interface 1302 is configured to input or output a signal; and
the processor 1301 is configured to perform a data processing operation of the network device in the foregoing method embodiments.

It may be understood that, in some scenarios, some optional features in embodiments of this application may be independently implemented without depending on another feature, for example, a solution on which the optional features currently are based, to resolve a corresponding technical problem and achieve corresponding effect. Alternatively, in some scenarios, the optional features may be combined with another feature based on a requirement. Correspondingly, the communication apparatus provided in embodiments of this application may also correspondingly implement these features or functions. Details are not described herein.

It should be noted that the processor in embodiments of this application may be an integrated circuit chip, and has a signal processing capability. In an implementation process, steps in the foregoing method embodiments can be implemented through a hardware integrated logic circuit in the processor, or by using instructions in a form of software. The processor may be a general-purpose processor, a digital signal processor (digital signal processor, DSP), an ASIC, a field programmable gate array (field programmable gate array, FPGA) or another programmable logic device, a discrete gate or a transistor logic device, or a discrete hardware component.

It may be understood that, in embodiments of this application, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and methods described in this specification includes but is not limited to these and any memory of another proper type.

This application further provides a computer-readable medium, configured to store computer software instructions. When the instructions are executed by a communication apparatus, the function in any one of the foregoing method embodiments is implemented.

This application further provides a computer program product, configured to store computer software instructions. When the instructions are executed by a communication apparatus, the function in any one of the foregoing method embodiments is implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In the foregoing embodiments, descriptions of embodiments have respective focuses. For a part that is not described in detail in an embodiment, refer to related descriptions in other embodiments.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A configuration indication method, wherein the method comprises:
obtaining, by a first apparatus, first control information, wherein the first control information indicates a configuration of M-hop data transmission between the first apparatus and a target apparatus, the M-hop data transmission is used to transmit first data, the M-hop transmission comprises transmission between the first apparatus and a second apparatus, the first control information comprises first information, second information, and third information, the first information indicates a configuration used to transmit the first data between the first apparatus and the second apparatus, the second information indicates a configuration of (M-1)-hop transmission, the (M-1)-hop transmission is (M-1)-hop transmission other than the transmission between the first apparatus and the second apparatus in the M-hop transmission, the third information indicates a configuration required by the target apparatus to receive the first data, and M is an integer greater than 1; and
sending, by the first apparatus, the first control information to the second apparatus.

2. The method according to claim 1, wherein the first information is carried on a first control channel, and the second information and the third information are carried on a second control channel.

3. The method according to claim 1, wherein the first information is carried on a first control channel, the second information is carried on a second control channel, and the third information is carried on a first data channel.

4. The method according to claim 2 or 3, wherein the first information or the second information further indicates a channel for transmitting third information.

5. The method according to any one of claims 1 to 4, wherein
the first information indicates one or more of the following configurations:
a minimum time gap for forwarding the first data from a first link to a second link, a delay budget of the transmission between the first apparatus and the second apparatus, a frequency domain resource configuration between the first apparatus and the second apparatus, and a time domain resource configuration between the first apparatus and the second apparatus, wherein the first link is a link between a network device and a terminal device, and the second link is a link between terminal devices;
the second information indicates one or more of the following configurations:
a time domain resource configuration of the (M-1)-hop transmission, a delay budget of the (M-1)-hop transmission, path information, a transmit beam configuration, a minimum gap between receiving time and forwarding time of a (M-1)-hop sidelink transmission, and a quasi colocation indicator; and
the third information indicates one or more of the following configurations:
a new data indicator, a redundancy version, a hybrid automatic repeat request HARQ process number, HARQ feedback enable, HARQ feedback time, and a HARQ feedback resource.

6. The method according to claim 5, wherein the sending, by the first apparatus, the first control information to the second apparatus comprises:
sending, by the first apparatus, the first control information to a second set, wherein the second set comprises a plurality of apparatuses, and the second apparatus is one apparatus in the second set.

7. A configuration indication method, wherein the method comprises:
receiving, by a second apparatus, first control information from a first apparatus, wherein the first control information indicates a configuration of M-hop data transmission between the first apparatus and a target apparatus, the M-hop data transmission is used to transmit first data, the M-hop transmission comprises transmission between the first apparatus and the second apparatus, the first control information comprises first information, second information, and third information, the first information indicates a configuration used to transmit the first data between the first apparatus and the second apparatus, the second information indicates a configuration of (M-1)-hop transmission, the (M-1)-hop transmission is (M-1)-hop transmission other than the transmission between the first apparatus and the second apparatus in the M-hop transmission, the third information indicates a configuration required by the target apparatus to receive the first data, and M is an integer greater than 1; and
receiving, by the second apparatus, the first data from the first apparatus based on the first control information.

8. The method according to claim 7, wherein the first information is carried on a first control channel, and the second information and the third information are carried on a second control channel.

9. The method according to claim 7, wherein the first information is carried on a first control channel, the second information is carried on a second control channel, and the third information is carried on a first data channel.

10. The method according to claim 8 or 9, wherein the first information or the second information further indicates a channel for transmitting third information.

11. The method according to any one of claims 7 to 10, wherein
the first information indicates one or more of the following configurations:
a minimum time gap for forwarding the first data from a first link to a second link, a delay budget of the transmission between the first apparatus and the second apparatus, a frequency domain resource configuration between the first apparatus and the second apparatus, and a time domain resource configuration between the first apparatus and the second apparatus, wherein the first link is a link between a network device and a terminal device, and the second link is a link between terminal devices;
the second information indicates one or more of the following configurations:
a time domain resource configuration of the (M-1)-hop transmission, a delay budget of the (M-1)-hop transmission, path information, a transmit beam configuration, a minimum gap between receiving time and forwarding time of the (M-1)-hop sidelink transmission, and a quasi co-location indicator; and
the third information indicates one or more of the following configurations:
a hybrid automatic repeat request HARQ process number, HARQ feedback enable, HARQ feedback time, and a HARQ feedback resource.

12. The method according to claim 11, wherein
the receiving, by a second apparatus, first control information from a first apparatus comprises:
receiving, by the second apparatus, the first control information from a first set, wherein the first set comprises a plurality of apparatuses, and the first apparatus is one apparatus in the first set.

13. A communication apparatus, wherein the communication apparatus comprises a module or a unit configured to perform the method according to any one of claims 1 to 6, or the communication apparatus comprises a module or a unit configured to perform the method according to any one of claims 7 to 12.

14. A computer-readable storage medium, wherein the storage medium stores a computer program or instructions; and when the computer program or the instructions are executed by a communication apparatus, the method according to any one of claims 1 to 6 is performed, or the method according to any one of claims 7 to 12 is performed.

15. A computer program product comprising instructions, wherein when the computer program product is run on a computer, the method according to any one of claims 1 to 6 is performed, or the method according to any one of claims 7 to 12 is performed.

## Patentansprüche

1. Konfigurationsanzeigeverfahren, wobei das Verfahren Folgendes umfasst:
Erlangen, durch eine erste Vorrichtung, erster Steuerinformationen, wobei die ersten Steuerinformationen eine Konfiguration einer M-Hop-Datenübertragung zwischen der ersten Vorrichtung und einer Zielvorrichtung anzeigen, die M-Hop-Datenübertragung dazu verwendet wird, erste Daten zu übertragen, die M-Hop-Übertragung eine Übertragung zwischen der ersten Vorrichtung und einer zweiten Vorrichtung umfasst, die ersten Steuerinformationen erste Informationen, zweite Informationen und dritte Informationen umfassen, die ersten Informationen eine Konfiguration anzeigen, die dazu verwendet wird, die ersten Daten zwischen der ersten Vorrichtung und der zweiten Vorrichtung zu übertragen, die zweiten Informationen eine Konfiguration einer (M-1)-Hop-Übertragung anzeigen, die (M-1)-Hop-Übertragung eine andere (M-1)-Hop-Übertragung als die Übertragung zwischen der ersten Vorrichtung und der zweiten Vorrichtung in der M-Hop-Übertragung ist, die dritten Informationen eine Konfiguration anzeigen, die durch die Zielvorrichtung erfordert wird, um die ersten Daten zu empfangen, und M eine Ganzzahl größer als 1 ist; und
Senden, durch die erste Vorrichtung, der ersten Steuerinformationen an die zweite Vorrichtung.

2. Verfahren nach Anspruch 1, wobei die ersten Informationen auf einem ersten Steuerkanal befördert werden und die zweiten Informationen und die dritten Informationen auf einem zweiten Steuerkanal befördert werden.

3. Verfahren nach Anspruch 1, wobei die ersten Informationen auf einem ersten Steuerkanal befördert werden, die zweiten Informationen auf einem zweiten Steuerkanal befördert werden und die dritten Informationen auf einem ersten Datenkanal befördert werden.

4. Verfahren nach Anspruch 2 oder 3, wobei die ersten Informationen oder die zweiten Informationen ferner einen Kanal zum Übertragen dritter Informationen anzeigen.

5. Verfahren nach einem der Ansprüche 1 bis 4, wobei die ersten Informationen eine oder mehrere der folgenden Konfigurationen anzeigen:
einer minimalen Zeitlücke zum Weiterleiten der ersten Daten von einer ersten Verknüpfung zu einer zweiten Verknüpfung, eines Verzögerungsbudgets der Übertragung zwischen der ersten Vorrichtung und der zweiten Vorrichtung, einer Frequenzdomänenressourcenkonfiguration zwischen der ersten Vorrichtung und der zweiten Vorrichtung und einer Zeitdomänenressourcenkonfiguration zwischen der ersten Vorrichtung und der zweiten Vorrichtung, wobei die erste Verknüpfung eine Verknüpfung zwischen einer Netzeinrichtung und einer Endgeräteeinrichtung ist und die zweite Verknüpfung eine Verknüpfung zwischen Endgeräteeinrichtungen ist;
die zweiten Informationen eine oder mehrere der folgenden Konfigurationen anzeigen:
einer Zeitdomänenressourcenkonfiguration der (M-1)-Hop-Übertragung, eines Verzögerungsbudgets der (M-1)-Hop-Übertragung, Pfadinformationen, einer Übertragungsstrahlkonfiguration, einer minimalen Lücke zwischen einer Empfangszeit und einer Weiterleitungszeit einer (M-1)-Hop-Sidelink-Übertragung und eines Quasi-Kolokalisierungsindikators; und
die dritten Informationen eine oder mehrere der folgenden Konfigurationen anzeigen:
eines Indikators neuer Daten, einer Redundanzversion, einer hybriden automatischen Wiederholungsanforderungsprozessnummer, HARQ-Prozessnummer, einer HARQ-Rückmeldungsaktivierung, einer HARQ-Rückmeldungszeit und einer HARQ-Rückmeldungsressource.

6. Verfahren nach Anspruch 5, wobei das Senden, durch die erste Vorrichtung, der ersten Steuerinformationen an die zweite Vorrichtung Folgendes umfasst:
Senden, durch die erste Vorrichtung, der ersten Steuerinformationen an einen zweiten Satz, wobei der zweite Satz eine Vielzahl von Vorrichtungen umfasst und die zweite Vorrichtung eine Vorrichtung in dem zweiten Satz ist.

7. Konfigurationsanzeigeverfahren, wobei das Verfahren Folgendes umfasst:
Empfangen, durch eine zweite Vorrichtung, erster Steuerinformationen von einer ersten Vorrichtung, wobei die ersten Steuerinformationen eine Konfiguration einer M-Hop-Datenübertragung zwischen der ersten Vorrichtung und einer Zielvorrichtung anzeigen, die M-Hop-Datenübertragung dazu verwendet wird, erste Daten zu übertragen, die M-Hop-Übertragung eine Übertragung zwischen der ersten Vorrichtung und der zweiten Vorrichtung umfasst, die ersten Steuerinformationen erste Informationen, zweite Informationen und dritte Informationen umfassen, die ersten Informationen eine Konfiguration anzeigen, die dazu verwendet wird, die ersten Daten zwischen der ersten Vorrichtung und der zweiten Vorrichtung zu übertragen, die zweiten Informationen eine Konfiguration einer (M-1)-Hop-Übertragung anzeigen, die (M-1)-Hop-Übertragung eine andere (M-1)-Hop-Übertragung als die Übertragung zwischen der ersten Vorrichtung und der zweiten Vorrichtung in der M-Hop-Übertragung ist, die dritten Informationen eine Konfiguration anzeigen, die durch die Zielvorrichtung erfordert wird, um die ersten Daten zu empfangen, und M eine Ganzzahl größer als 1 ist; und
Empfangen, durch die zweite Vorrichtung, der ersten Daten von der ersten Vorrichtung basierend auf den ersten Steuerinformationen.

8. Verfahren nach Anspruch 7, wobei die ersten Informationen auf einem ersten Steuerkanal befördert werden und die zweiten Informationen und die dritten Informationen auf einem zweiten Steuerkanal befördert werden.

9. Verfahren nach Anspruch 7, wobei die ersten Informationen auf einem ersten Steuerkanal befördert werden, die zweiten Informationen auf einem zweiten Steuerkanal befördert werden und die dritten Informationen auf einem ersten Datenkanal befördert werden.

10. Verfahren nach Anspruch 8 oder 9, wobei die ersten Informationen oder die zweiten Informationen ferner einen Kanal zum Übertragen dritter Informationen anzeigen.

11. Verfahren nach einem der Ansprüche 7 bis 10, wobei die ersten Informationen eine oder mehrere der folgenden Konfigurationen anzeigen:
einer minimalen Zeitlücke zum Weiterleiten der ersten Daten von einer ersten Verknüpfung zu einer zweiten Verknüpfung, eines Verzögerungsbudgets der Übertragung zwischen der ersten Vorrichtung und der zweiten Vorrichtung, einer Frequenzdomänenressourcenkonfiguration zwischen der ersten Vorrichtung und der zweiten Vorrichtung und einer Zeitdomänenressourcenkonfiguration zwischen der ersten Vorrichtung und der zweiten Vorrichtung, wobei die erste Verknüpfung eine Verknüpfung zwischen einer Netzeinrichtung und einer Endgeräteeinrichtung ist und die zweite Verknüpfung eine Verknüpfung zwischen Endgeräteeinrichtungen ist;
die zweiten Informationen eine oder mehrere der folgenden Konfigurationen anzeigen:
einer Zeitdomänenressourcenkonfiguration der (M-1)-Hop-Übertragung, eines Verzögerungsbudgets der (M-1)-Hop-Übertragung, Pfadinformationen, einer Übertragungsstrahlkonfiguration, einer minimalen Lücke zwischen einer Empfangszeit und einer Weiterleitungszeit der (M-1)-Hop-Sidelink-Übertragung und eines Quasi-Kolokalisierungsindikators; und
die dritten Informationen eine oder mehrere der folgenden Konfigurationen anzeigen:
einer hybriden automatischen Wiederholungsanforderungsprozessnummer, HARQ-Prozessnummer, einer HARQ-Rückmeldungsaktivierung, einer HARQ-Rückmeldungszeit und einer HARQ-Rückmeldungsressource.

12. Verfahren nach Anspruch 11, wobei
das Empfangen, durch eine zweite Vorrichtung, erster Steuerinformationen von einer ersten Vorrichtung Folgendes umfasst:
Empfangen, durch die zweite Vorrichtung, der ersten Steuerinformationen von einem ersten Satz, wobei der erste Satz eine Vielzahl von Vorrichtungen umfasst und die erste Vorrichtung eine Vorrichtung in dem ersten Satz ist.

13. Kommunikationsvorrichtung, wobei die Kommunikationsvorrichtung ein Modul oder eine Einheit umfasst, das/die dazu konfiguriert ist, das Verfahren nach einem der Ansprüche 1 bis 6 durchzuführen, oder die Kommunikationsvorrichtung ein Modul oder eine Einheit umfasst, das/die dazu konfiguriert ist, das Verfahren nach einem der Ansprüche 7 bis 12 durchzuführen.

14. Computerlesbares Speichermedium, wobei das computerlesbare Speichermedium ein Computerprogramm oder Anweisungen speichert; und, wenn das Computerprogramm oder die Anweisungen durch eine Kommunikationsvorrichtung ausgeführt werden, das Verfahren nach einem der Ansprüche 1 bis 6 durchgeführt wird oder das Verfahren nach einem der Ansprüche 7 bis 12 durchgeführt wird.

15. Computerprogrammprodukt, umfassend Anweisungen, wobei, wenn das Computerprogrammprodukt auf einem Computer läuft, das Verfahren nach einem der Ansprüche 1 bis 6 durchgeführt wird oder das Verfahren nach einem der Ansprüche 7 bis 12 durchgeführt wird.

## Revendications

1. Procédé d'indication de configuration, dans lequel le procédé comprend :
l'obtention, par un premier appareil, de premières informations de commande, dans lequel les premières informations de commande indiquent une configuration de transmission de données à M sauts entre le premier appareil et un appareil cible, la transmission de données à M sauts est utilisée pour transmettre des premières données, la transmission à M sauts comprend une transmission entre le premier appareil et un second appareil, les premières informations de commande comprennent des premières informations, des deuxièmes informations et des troisièmes informations, les premières informations indiquent une configuration utilisée pour transmettre les premières données entre le premier appareil et le second appareil, les deuxièmes informations indiquent une configuration de transmission à (M-1) sauts, la transmission à (M-1) sauts est une transmission à (M-1) sauts autre que la transmission entre le premier appareil et le second appareil dans la transmission à M sauts, les troisièmes informations indiquent une configuration requise par l'appareil cible pour recevoir les premières données, et M est un entier supérieur à 1 ; et
l'envoi, par le premier appareil, des premières informations de commande au second appareil.

2. Procédé selon la revendication 1, dans lequel les premières informations sont transportées sur un premier canal de commande, et les deuxièmes informations et les troisièmes informations sont transportées sur un second canal de commande.

3. Procédé selon la revendication 1, dans lequel les premières informations sont transportées sur un premier canal de commande, les deuxièmes informations sont transportées sur un second canal de commande et les troisièmes informations sont transportées sur un premier canal de données.

4. Procédé selon la revendication 2 ou 3, dans lequel les premières informations ou les deuxièmes informations indiquent également un canal pour la transmission de troisièmes informations.

5. Procédé selon l'une quelconque des revendications 1 à 4, dans lequel
les premières informations indiquent une ou plusieurs des configurations suivantes :
un intervalle de temps minimal pour la transmission des premières données d'une première liaison à une seconde liaison, un budget de délai de la transmission entre le premier appareil et le second appareil, une configuration de ressources dans le domaine fréquentiel entre le premier appareil et le second appareil, et une configuration de ressources dans le domaine temporel entre le premier appareil et le second appareil, dans lequel la première liaison est une liaison entre un dispositif réseau et un dispositif terminal, et la seconde liaison est une liaison entre des dispositifs terminaux ;
les deuxièmes informations indiquent une ou plusieurs des configurations suivantes :
une configuration de ressources dans le domaine temporel de la transmission à (M-1) sauts, un budget de délai de la transmission à (M-1) sauts, des informations sur le chemin, une configuration de faisceau d'émission, un intervalle minimal entre le temps de réception et le temps de transmission d'une transmission de liaison latérale à (M-1) sauts, et un indicateur de quasicolocalisation ; et
les troisièmes informations indiquent une ou plusieurs des configurations suivantes :
un nouvel indicateur de données, une version de redondance, un numéro de processus de demande de répétition automatique hybride HARQ, l'activation du retour d'informations HARQ, le délai de retour d'informations HARQ et une ressource de retour d'informations HARQ.

6. Procédé selon la revendication 5, dans lequel l'envoi, par le premier appareil, des premières informations de commande au second appareil comprend :
l'envoi, par le premier appareil, des premières informations de commande à un second ensemble, dans lequel le second ensemble comprend une pluralité d'appareils, et le second appareil est un appareil du second ensemble.

7. Procédé d'indication de configuration, dans lequel le procédé comprend :
la réception, par un second appareil, de premières informations de commande provenant d'un premier appareil, dans lequel les premières informations de commande indiquent une configuration de transmission de données à M sauts entre le premier appareil et un appareil cible, la transmission de données à M sauts est utilisée pour transmettre des premières données, la transmission à M sauts comprend une transmission entre le premier appareil et le second appareil, les premières informations de commande comprennent des premières informations, des deuxièmes informations et des troisièmes informations, les premières informations indiquent une configuration utilisée pour transmettre les premières données entre le premier appareil et le second appareil, les deuxièmes informations indiquent une configuration de transmission à (M-1) sauts, la transmission à (M-1) sauts est une transmission à (M-1) sauts autre que la transmission entre le premier appareil et le second appareil dans la transmission à M sauts, les troisièmes informations indiquent une configuration requise par l'appareil cible pour recevoir les premières données, et M est un entier supérieur à 1 ; et
la réception, par le second appareil, des premières données provenant du premier appareil sur la base des premières informations de commande.

8. Procédé selon la revendication 7, dans lequel les premières informations sont transportées sur un premier canal de commande, et les deuxièmes informations et les troisièmes informations sont transportées sur un second canal de commande.

9. Procédé selon la revendication 7, dans lequel les premières informations sont transportées sur un premier canal de commande, les deuxièmes informations sont transportées sur un second canal de commande et les troisièmes informations sont transportées sur un premier canal de données.

10. Procédé selon la revendication 8 ou 9, dans lequel les premières informations ou les deuxièmes informations indiquent également un canal pour la transmission de troisièmes informations.

11. Procédé selon l'une quelconque des revendications 7 à 10, dans lequel
les premières informations indiquent une ou plusieurs des configurations suivantes :
un intervalle de temps minimal pour la transmission des premières données d'une première liaison à une seconde liaison, un budget de délai de la transmission entre le premier appareil et le second appareil, une configuration de ressources dans le domaine fréquentiel entre le premier appareil et le second appareil, et une configuration de ressources dans le domaine temporel entre le premier appareil et le second appareil, dans lequel la première liaison est une liaison entre un dispositif réseau et un dispositif terminal, et la seconde liaison est une liaison entre des dispositifs terminaux ;
les deuxièmes informations indiquent une ou plusieurs des configurations suivantes :
une configuration de ressources dans le domaine temporel de la transmission à (M-1) sauts, un budget de délai de la transmission à (M-1) sauts, des informations sur le chemin, une configuration de faisceau d'émission, un intervalle minimal entre le temps de réception et le temps de transmission de la transmission de liaison latérale à (M-1) sauts, et un indicateur de quasicolocalisation ; et
les troisièmes informations indiquent une ou plusieurs des configurations suivantes :
un numéro de processus de demande de répétition automatique hybride HARQ, l'activation du retour d'informations HARQ, le délai de retour d'informations HARQ et une ressource de retour d'informations HARQ.

12. Procédé selon la revendication 11, dans lequel
la réception, par un second appareil, de premières informations de commande provenant d'un premier appareil comprend :
la réception, par le second appareil, des premières informations de commande provenant d'un premier ensemble, dans lequel le premier ensemble comprend une pluralité d'appareils, et le premier appareil est un appareil du premier ensemble.

13. Appareil de communication, dans lequel l'appareil de communication comprend un module ou une unité configuré(e) pour réaliser le procédé selon l'une quelconque des revendications 1 à 6 ou l'appareil de communication comprend un module ou une unité configuré(e) pour réaliser le procédé selon l'une quelconque des revendications 7 à 12.

14. Support de stockage lisible par ordinateur, dans lequel le support de stockage stocke un programme informatique ou des instructions ; et lorsque le programme informatique ou les instructions sont exécutés par un appareil de communication, le procédé selon l'une quelconque des revendications 1 à 6 est réalisé, ou le procédé selon l'une quelconque des revendications 7 à 12 est réalisé.

15. Produit de programme informatique comprenant des instructions, dans lequel lorsque le produit de programme informatique est exécuté sur un ordinateur, le procédé selon l'une quelconque des revendications 1 à 6 est réalisé, ou le procédé selon l'une quelconque des revendications 7 à 12 est réalisé.
